(19) Europäisches Patentamt

European Patent Office

Office européen des brevets

(11) **EP 0 709 746 B1**

(12) **EUROPEAN PATENT SPECIFICATION**

(45) Date of publication and mention
of the grant of the patent:
**10.01.2001 Bulletin 2001/02**

(51) Int Cl.⁷: $G03G\ 15/02$

(21) Application number: **95307750.0**

(22) Date of filing: **31.10.1995**

(54) **Image forming method, image forming apparatus, process cartridge and use of developer material for said method**

Verfahren und Gerät zur Bilderzeugung, Prozesskassette und Verwendung von Entwicklermaterial für das Verfahren

Méthode et appareil de formation d'images, cassette de traitement et utilisation de materiau développateur pour ladite méthode

(84) Designated Contracting States:
**DE ES FR GB IT NL**

(30) Priority: **31.10.1994 JP 29039394**
**08.09.1995 JP 23127295**

(43) Date of publication of application:
**01.05.1996 Bulletin 1996/18**

(73) Proprietor: **CANON KABUSHIKI KAISHA**
**Tokyo (JP)**

(72) Inventors:
• **Chigono, Yasunori**
**Ohta-ku, Tokyo (JP)**
• **Ishiyama, Harumi**
**Ohta-ku, Tokyo (JP)**
• **Furuya, Tadashi**
**Ohta-ku, Tokyo (JP)**

• **Mashimo, Seiji**
**Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 459 607        EP-A- 0 575 159**
**EP-A- 0 598 483        EP-A- 0 615 177**

• **PATENT ABSTRACTS OF JAPAN vol. 016 no. 182 (P-1346) ,30 April 1992 & JP-A-04 021873 (CANON INC) 24 January 1992,**

**Description**

BACKGROUND OF THE INVENTION

Field of the invention

This invention relates to an image forming method which renders an electrostatic latent image visible by developing into a toner image, an image forming apparatus such as a copying machine or a printer using this image forming method, and a process cartridge detachable from the body of this image forming apparatus. More particularly, this invention relates to an image forming method, an image forming apparatus and a process cartridge which carry out charging by bringing a charging means into contact with an image bearing member (photosensitive member).

Related Background Art

As the charging device for electrophotography, the corona charging assembly has been hitherto used. Recently, as a substitute therefor, contact charging devices are being put in practice. Such contact charging devices aim at low ozone generation and low power consumption. In particular, roller charging using a conductive roller as a charging member, is preferably used in view of the stable charging.

In the roller charging system, a conductive elastic roller is brought into pressure contact with the object to be charged and voltages are applied thereto.

Here, not limiting to the roller charging system, when a charging member having a low resistance value is brought in contact with a drum having any scratches or pinholes on the drum surface, an excess leak current flows from the charging member to cause faulty charging around the fault, expansion of pinholes and electrical breakdown of the charging member. To prevent these adversity, the charging member must have a resistance value of about $1 \times 10^4 \ \Omega$ or above. If, however, the resistance value exceeds $1 \times 10^7 \ \Omega$, the current necessary for charging cannot flow. Hence, the resistance value of the contact charging member must be within the range of from $1 \times 10^4$ to $1 \times 10^7 \ \Omega$.

In the roller charging system, the charging is mainly carried out by the discharge from the charging member to the member to be charged. Hence the charging takes place when a voltage above a certain threshold value is applied. For example, when a charging roller is brought into pressure contact with an OPC (organic photoconductor) photosensitive member having a 25 μm thick surface layer and voltage is applied thereto, the surface potential of the photosensitive member begins to rise at a voltage of about 640 kV, and beyond the threshold voltage the photosensitive member surface potential linearly increases at a slope of 1 to the applied voltage. This threshold value voltage is hereinafter defined as charging starting voltage $V_{th}$.

Namely, in order to obtain a necessary surface potential $V_d$ of the photosensitive member for electrophotography, a DC voltage of $V_d + V_{th}$ must be applied to the charging roller. The charging carried out by applying only a DC voltage to the contact charging member in this way is called DC charging.

In DC charging, however, it is difficult to control the potential of the photosensitive member at the desired value since the resistance value of the contact charging member varies depending on the environmental changes, and the $V_{th}$ varies according to the change of the layer thickness due to the scrape of the photosensitive member.

Thus, in order to achieve steady charging, as disclosed in Japanese Patent Application Laid-open No. 63-149669, AC charging is applied to the contact charging member, which is a voltage produced by superimposing an AC component having a peak-to-peak voltage of $2 \times V_{th}$ or above, on a DC voltage corresponding to the desired $V_d$. This method aims at a potential-leveling effect due to AC, where the potential of the charged member converges to $V_d$, the middle point of the AC peak potentials, and is by no means affected by external disturbance such as environmental changes.

However, even in such contact charging devices, its fundamental charging mechanism utilizes the phenomenon of discharging from the charging member to the photosensitive member. Hence, as previously stated, the voltage necessary for charging must be higher than the photosensitive member surface potential and ozone is generated a little. Ozone is also generated when AC charging is carried out in order to achieve uniform charging.

Then, as a new charging system, a charging system using direct injection of charges into the photosensitive member is proposed in Japanese Patent Application Laid-open No. 6-3921 and European Patent Application Publication No.0615177. In this contact charging system, a voltage is applied to the contact charging member such as a charging roller, a charging brush or a charging magnetic brush so that charges are injected into a float electrode on the photosensitive member provided with an injection layer on its surface. Specifically, the former, Japanese Patent Application Laid-open No. 6-3921, describes that charge injection layer can be formed on the surface of the photosensitive member by coating an acrylic resin in which a conductive filler, $SnO_2$ particles made conductive by doping with antimony is dispersed. The magnetic brush is a charging member comprising conductive magnetic particles magnetically bound on a magnet roll so as to form a brush, and the brush is brought into touch with the photosensitive member to carry out charging. Since no discharging phenomenon is utilized in this charging system, the DC voltage necessary for charging is equal to the desired photosensitive member surface potential, and also no ozone is generated.

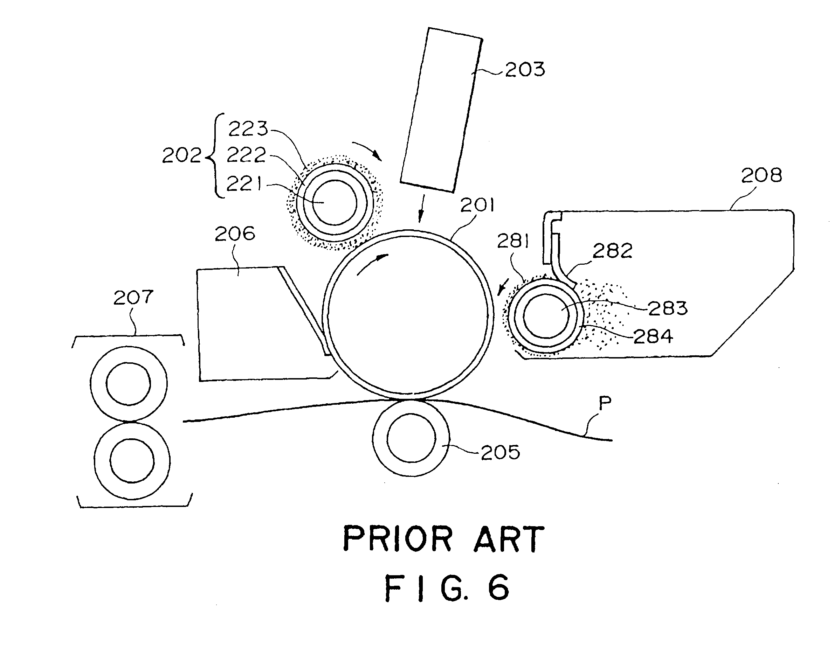

Fig. 6 schematically illustrates a prior art system. A magnetic brush charging assembly 202, an exposure assembly 203, a developing assembly 208, a transfer charging assembly 205 and a cleaner member 206 are provided around a photosensitive member 201 having a charge injection layer, and in addition a fixing assembly 207 for fixing the toner on a recording paper P is provided to make up the system.

The magnetic brush charging assembly 202 is constituted of a non-magnetic sleeve 222, a magnet roll 221 provided inside the sleeve and conductive magnetic particles 223 magnetically bound onto the non-magnetic sleeve 222, where the sleeve is kept to stand at a given distance from the photosensitive member 201 so as for the brush to come in touch with the photosensitive member to uniformly charge it by charge injection.

Japanese Patent Application Laid-open No. 4-34566 discloses an electrophotographic apparatus employing a magnetic brush and no cleaning assembly, that is, this embodies a process dispensing with a cleaner. The cleaner having an elastic blade takes off and recovers the toner remaining on the photosensitive member after the transfer of the toner image. It brings about a superior image forming apparatus with a low running cost and no waste toner production as well as the compact size.

However, conventional magnetic brush charging assemblies have the problem that the toner having escaped from the cleaner zone and remained on the photosensitive drum enters the charging magnetic brush and gradually accumulates there to deteriorate the charging performance. Once the toner has escaped from the cleaner and entered the charging magnetic brush, the insulating toner moves around inside the brush and blocks the conducting path between conductive magnetic particles themselves or between the particles and the photosensitive drum to deteriorate the charging performance. When this occurs, the magnetic binding force of the magnetic brush extends to the magnetic toner, so that the toner is accumulated in the magnetic brush and melt-adheres to the surfaces of the conductive magnetic particles. Hence, it has been difficult to continue charging over a long period of time.

In the constitution having no cleaner, the remaining toner after the toner image transfer may intrude into the brush in a large quantity and accumulate there to cause deterioration of charging assemblies thus faulty charging. Also during a long term printing, the recovery of the toner from the photosensitive member becomes low and the magnetic brush charger cannot charge any more because of the high resistance caused by the toner accumulated in it.

## SUMMARY OF THE INVENTION

An object of the present invention is to provide an image forming method, an image forming apparatus and a process cartridge that have solved the problems discussed above.

Another object of the present invention is to provide an image forming method, an image forming apparatus and a process cartridge that enable toner to be temporarily taken into, and unloaded from the magnetic brush so that faulty charging is prevented to form good images.

Still another object of the present invention is to provide an image forming method, an image forming apparatus and a process cartridge that enable the toner to be temporarily collected in, and unloaded from the magnetic brush smoothly so that high quality images can be obtained over a long period of time.

The present invention provides an image forming method comprising:

electrostatically charging an image bearer member by a charging means;
forming an electrostatic latent image on the image bearer member thus charged, by a latent image forming means;
developing the electrostatic latent image with a magnetic toner to form a toner image; and
transferring the toner image to a transfer medium;
wherein;
the charging means comprises a charging assembly having a magnetic brush formed from magnetically bound conductive magnetic particles; the charging assembly electrostatically charges the surface of the image bearer member by coming into contact with the image bearer member and directly injecting charges into the surface of the image bearer member; and
the magnetic toner has a value of $\sigma \cdot D \cdot \delta$ of 150 or less, where the value is obtained by multiplying i) a magnetization quantity a ($Am^2/kg$) in a magnetic field of 1 K oersted as measured by a vibration magnetometer, ii) a weight average particle diameter ($D_4$) D ($\mu m$) of the magnetic toner and iii) a density $\delta$ ($g/cm^3$) thereof.

The present invention also provides an image forming apparatus comprising:

an image bearer member for bearing an electrostatic latent image;
a charging means for electrostatically charging the image bearer member;
a latent image forming means for forming an electrostatic latent image on the charged image bearer member;

a developing means holding a magnetic toner, for rendering the electrostatic latent image visible by development to form a toner image; and

a transfer means for transferring the toner image to a transfer medium;

wherein;

the charging means comprises a charging assembly having a magnetic brush formed from magnetically bound conductive magnetic particles; the charging assembly electrostatically charges the surface of the image bearer member by coming into contact with the image bearer member and directly injecting charges into the surface of the image bearer member; and

the magnetic toner has a value of $\sigma \cdot D \cdot \delta$ of 150 or less where the value is obtained by multiplying i) a magnetization quantity $\sigma$ ($Am^2/kg$) in a magnetic field of 1 K oersted as measured by a vibration magnetometer, ii) a weight average particle diameter ($D_4$) D ($\mu m$) of the magnetic toner and iii) a density $\delta$ ($g/cm^3$) thereof.

The present invention also provides a process cartridge detachably mountable to a main assembly of an image forming apparatus, comprising:

an image bearer member for bearing an electrostatic latent image;

a charging means for electrostatically charging the image bearer member; and

a developing means for rendering visible the electrostatic latent image held on the image bearer member, by development to form a toner image;

wherein;

the charging means comprises a charging assembly having a magnetic brush formed from magnetically bound conductive magnetic particles; the charging assembly electrostatically charges the surface of the image bearer member by coming into contact with the image bearer member and directly injecting charges into the surface of the image bearer member; and

the magnetic toner has a value of $\sigma \cdot D \cdot \delta$ of 150 or less obtained by multiplying i) a magnetization quantity $\sigma$ ($Am^2/kg$) in a magnetic field of 1 K oersted as measured by a vibration magnetometer, ii) a weight average particle diameter ($D_4$) D ($\mu m$) of the magnetic toner and iii) a density $\delta$ ($g/cm^3$) thereof.

The present invention is also directed to the use of a special developer material in an electrophotographic image forming method.

BRIEF DESCRIPTION OF THE DRAWINGS

Fig. 1 schematically illustrates an image forming apparatus according to a first embodiment of the present invention.

Fig. 2 illustrates detailed partial structure of an image bearing member (a photosensitive drum) used in the first embodiment.

Fig. 3 schematically illustrates an image forming apparatus according to a second embodiment of the present invention.

Fig. 4 schematically illustrates a process cartridge according to a first embodiment of the present invention.

Fig. 5 schematically illustrates a process cartridge according to a second embodiment of the present invention.

Fig. 6 schematically illustrates a conventional image forming apparatus.

DESCRIPTION OF THE PREFERRED EMBODIMENTS

In the present invention, a magnetic toner is used. The magnetic toner not transferred and remaining on the photosensitive member after the toner image transfer contains magnetic toner having been charged in reverse polarity by the action of transfer voltage applied during the toner image transfer. When this remained magnetic toner after the transfer comes to the magnetic brush charging assembly, it contaminates, or is collected (or taken-in) into the inside of the magnetic brush. The collected magnetic toner comes into contact with conductive magnetic particles forming the magnetic brush, so that an appropriate triboelectricity of regular polarity is imparted to the toner including the magnetic toner having been charged in the reverse polarity. This magnetic toner imparted with an appropriate triboelectricity in regular polarity has $\sigma \cdot D \cdot \delta$ value of 150 or less, calculated by multiplying i) a magnetization quantity $\sigma$ ($Am^2/kg$) in a magnetic field of 1 K oersted measured by a vibration magnetometer, ii) a weight average particle diameter ($D_4$) D ($\mu m$) of the magnetic toner and iii) a density $\delta$ ($g/cm^3$) thereof, thus this magnetic toner is weak in the magnetic binding force. Hence, due to the potential difference between the magnetic brush charging assembly and the image bearing member when the surface of the image bearing member is charged by the magnetic brush charging assembly, the toner is well unloaded (or emitted) from the magnetic brush to the image bearing member. More specifically, when the surface of the image bearing member is charged by the magnetic brush charging assembly, the magnetic brush has a high resistance under application of a low electric field and hence the potential on the side of the image bearing member surface becomes lower by about 5 to 50 V than that of the magnetic brush charging assembly, so that, on account of this potential difference, the magnetic toner imparted with an appropriate triboelectricity in regular polarity repulses the magnetic brush, and moves from the magnetic brush charging assembly to the image bearing member overcoming the weak magnetic binding force of the magnetic brush, as in development.

Thus, the magnetic toner which has entered the charging assembly, can be unloaded from the magnetic brush when it acquires enough triboelectricity so that the electrostatic attraction force between the image bearing member surface becomes stronger than the weak magnetic binding force between the magnetic brush, and hence the accumulation of the magnetic toner having entered the magnetic brush charging assembly is prevented not to result in poor performance or melt adhesion of the toner component to the surfaces of the conductive magnetic particles.

In addition, since the toner is a magnetic toner and the magnetic binding force is acting between the magnetic brush, it does not come off from the magnetic brush easily not causing scattering, and it can receive sufficient triboelectricity of regular polarity surely and in a short time.

In the present invention, the value of $\sigma \cdot D \cdot \delta$ of the magnetic toner is 150 or less, preferably from 50 to 150, and more preferably from 100 to 130.

If this value of $\sigma \cdot D \cdot \delta$ exceeds 150, the magnetic binding force acting between the magnetic toner and the magnetic brush becomes so strong that the release of the magnetic toner from the magnetic brush charging assembly becomes difficult. When the value of $\sigma \cdot D \cdot \delta$ is 50 or more, the magnetic toner can have an appropriate magnetic binding force, thus it may hardly come off from the magnetic brush and scatter in the magnetic brush charging assembly, ensuring the acquisition of the appropriate triboelectricity of regular polarity in a short time, and no magnetic toner accumulates inside the magnetic brush of the charging assembly, making it superior in view of durability. Also since the magnetic toner can be surely taken into the magnetic brush charging assembly, the magnetic toner remaining and having been charged in reverse polarity after the toner image transfer can be charged in regular polarity and transferred to the image bearing member. Hence, when applied to a method in which the toner remaining after the transfer is removed at the time of developing, this is particularly preferable because of good cleaning.

In the present invention, the magnetization quantity $\sigma$ of the magnetic toner may preferably be from 10 to 30 $Am^2/kg$, and more preferably from 10 to 20 $Am^2/kg$. If the magnetization quantity $\sigma$ of the magnetic toner exceeds 30 $Am^2/kg$, the content of the magnetic material is so large that fixing performance of the toner becomes poor. Also, if it is less than 10 $Am^2/kg$, the magnetic properties themselves may be lost resulting in substantial lowering in the transport performance of toner and in the collection of the toner into the magnetic brush.

In the present invention, the magnetization quantity of the magnetic toner is measured by a vibration magnetometer VSM-3S-15 (manufactured by Toei Kogyo K.K.) under application of a magnetic field of 1 K oersted.

In the present invention, the weight average particle diameter D of the magnetic toner may preferably be from 2 to 20 $\mu$m, and more preferably from 4 to 8 $\mu$m. If the weight average particle diameter D is larger than 20 $\mu$m, latent images can not be accurately developed greatly lowering the image quality. Also, if it is smaller than 2 $\mu$m, such problems as the black spots around the image or increased fog will occur on developing.

In the present invention, the weight average particle diameter of the magnetic toner is measured using a Coulter counter Multisizer II (manufactured by Coulter Co.) to determine weight-based weight average particle diameter calculated from volume distribution.

In the present invention, the density $\delta$ of the magnetic toner may preferably be from 1.1 to 2.0, more preferably from 1.1 to 1.6, and still more preferably from 1.4 to 1.6. If the density $\delta$ exceeds 2.0, the toner has such a large content of magnetic material that its fixing performance may lower. Also, if it is less than 1.1, the selection of magnetic materials may become greatly restricted.

In the present invention, the density of the magnetic toner means the true density of particles, and the true density is measured using a dry density meter ACCUPYC 133 (manufactured by Shimadzu Corporation).

The magnetic toner of the present invention may preferably have insulating properties with a volume resistivity of $10^9 \ \Omega \cdot cm$ or above, and more preferably from or more, further more preferably $10^{14} \ \Omega \cdot cm$ $10^{10} \ \Omega \cdot cm$ or more. If the volume resistivity of the magnetic toner is less than $10^9 \ \Omega \cdot cm$, it is difficult for the magnetic toner itself to have sufficient charges, lowering the developing performance and deteriorating the image quality.

In the present invention, the volume resistivity of the magnetic toner is measured in the following way. A particulate sample is put in an aluminum ring of 40 mm diameter, which is then press-molded at 2,500 N, and the volume resistivity of the molded product is measured on a resistivity meter LOWRESTER AP or HIGHRESTER IP (both manufactured by Mitsubishi Yuka Co., Ltd.), using a four-terminal probe. The measurement is made in an environment of 20 to 25°C and 50 to 60%RH.

Charging performance can be more improved when a voltage produced by superimposing AC voltage on DC voltage is applied to the magnetic brush charging assembly, making the effect of the present invention greater.

In the cleanerless constitution, most of the toner remaining on the image bearing member after passing through the transfer charging assembly, temporarily enters the magnetic brush charging assembly. Therefore, a large quantity of the toner enters the magnetic brush and it is greatly effective to employ the constitution according to the present invention.

In image forming apparatus where the outermost surface layer of the image bearing member contains conductive fine particles dispersed in binder resin and the image bearing member is electrostatically charged by direct injection of the charges into the electron level on the surface layer, more excellent image formation can be maintained by employing the constitution according to the present invention in which the magnetic force is appropriately controlled on account of the small potential difference between the charging assembly and the image bearing member.

The present invention will be described in detail with reference to the accompanying drawings.

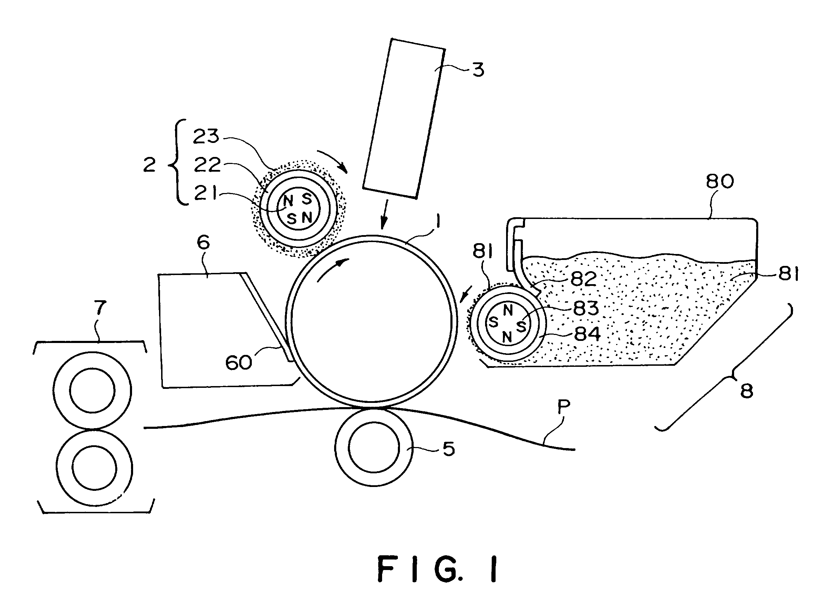

Fig. 1 is a cross section of an image forming apparatus according to a first embodiment of the present invention. The apparatus comprises a photosensitive drum 1 serving as an image bearing member (in the claims called "image bearer member") having a charge injection function on its surface, and provided around it a magnetic brush charging assembly 2 as a charging means, an exposure assembly 3 as a latent image forming means, a developing assembly 8 as a developing means, a transfer charging assembly 5 as a transfer means, a cleaner member 6 as a cleaning member, and a fixing assembly 7 as a fixing means.

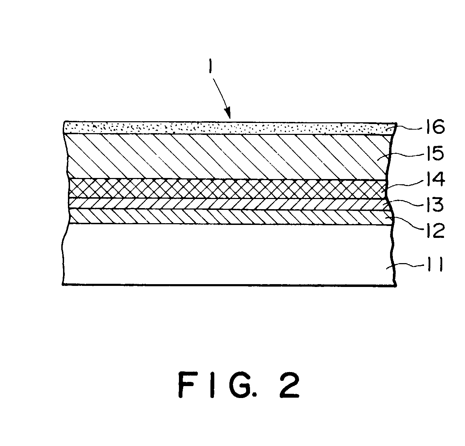

The magnetic brush charging assembly 2, developing assembly 8 and photosensitive drum 1 which are important in the present invention will be detailed on their constitution. Details of the photosensitive drum 1 are shown in Fig. 2. The photosensitive drum 1 has the structure that on an aluminum substrate 11 a subbing layer 12, a positive charge injection blocking layer 13, a charge generation layer 14 and a charge transport layer 15 are provided by coating in this order to form an organic photoconductor (OPC) drum, on the surface of which a charge injection layer 16 is further provided. The charge injection layer 16 may preferably be a resin layer in which conductive fine particles are dispersed in an amount of from 20 to 100 parts by weight based on 100 parts by weight of a resin such as photo-curable acrylic resin. As the conductive fine particles, a white or transparent material such as $SnO_2$, $TiO_2$ or ITO may be used. The conductive fine particles may preferably have an average particle diameter of 1 $\mu$m or smaller, and more preferably within the range of from 0.5 to 50 nm for the purpose of uniform charging.

In the present invention, the average particle diameter of the conductive fine particles is determined by randomly sampling at least 100 particles under a scanning electron microscope, calculating volume particle size distribution on the basis of maximum horizontal-direction chord length, and regarding its 50% average particle diameter as the average particle diameter.

As the resin that binds the conductive fine particles, it is possible to use resin materials such as acrylic resin, polycarbonate, polyester, polyethylene terephthalate and polystyrene. In addition, in order to improve lubricity of the photosensitive drum surface, an active material such as Teflon may be added in the charge injection layer in an amount of from 10 to 40 parts by weight based on 100 parts by weight of the resin. For the purpose of film formation, a cross-linking agent and a polymerization initiator may be added in appropriate amounts. The charge injection layer 16 is a layer intentionally prepared as an injection site through which charges are directly injected from the magnetic brush charging assembly 2 to uniformly charge the surface. The charge injection layer 16 must have a resistance value of 1 x $10^8$ $\Omega$·cm or above so that the charges of latent images do not flow through the surface.

In the present invention, the resistance value of the charge injection layer 16 is determined by measuring the surface resistance of a charge injection layer formed on an insulating sheet using a high-resistance meter 4329A, manufactured by HP Co., under an applied voltage of 100 V.

In the present invention, it is important for the surface layer of the photosensitive member to have an electron level where electrons can be endowed, and by no means limiting to the structure of an independent charge injection layer. In view of maintaining charging performance, however, it is especially more advantageous to provide a charge injection layer having a good lubricity, since the surface can give good releasability to the toner improving the transfer efficiency and decreasing the toner which escapes from the cleaner and enters the brush. The charging performance can be greatly improved by forming a layer especially made to have the injection function.

The magnetic brush charging assembly 2 is constituted of a non-magnetic sleeve 22, a magnet roll 21 provided inside the sleeve 22 and conductive magnetic particles 23 magnetically bound on it. The magnetic strength of the magnetic brush charging assembly on the sleeve surface, is preferably 400-1500 gauss, more preferably 600-1300 gauss, in view of satisfactory unloading of the magnetic toner from the magnetic brush.

In addition, it is preferable that the number of the magnetic poles used in the magnetic brush charging assembly is 2 or more.

The position of the magnetic poles of the magnetic roll in the magnetic brush charging assembly is preferably set so that the peak of the magnetic force may present within an angle of 20°, more preferably of 10°, in the rotation direction of the photosensitive drum, measuring from the line connecting the centers of the photosensitive drum and the magnetic brush charging assembly, in view of satisfactory unloading of the magnetic toner from the magnetic brush.

The magnetic brush comes in touch with the surface of the photosensitive drum 1 by bringing in touch the longitudinal ends of the sleeve 22 with the photosensitive drum 1, at these ends spacer members are provided (not shown) to keep a distance of between 0.3 and 1.0 mm, typically 0.5 mm, between the surfaces of the sleeve 22 and the photosensitive drum 1. The sleeve 22 is rotated in the same direction as the drum 1 (in the clockwise direction as viewed in Fig. 1) while the magnet roll 21 is set stationary. Then, at the time of charging, a desired voltage is applied to the sleeve 22, whereupon charges are injected into the charge injection layer 16 and the surface of the photosensitive drum 1 is finally electrostatically charged (supplied with electrostatic charge) to the same potential as the magnetic brush. During charging the voltage potential difference between the sleeve and the drum is initially 5-50 V and an elecrostatic field of between 50 and 1600 V/cm is produced at the brush surface.

As the conductive magnetic particles, various materials may be used which are single-component crystals or mixed crystals of conductive metals such as ferrite and magnetite. They are conductive particles once sintered, which are then subjected to reduction or oxidation treatment and controlled to have the resistance value stated later. As the other constitution of the conductive magnetic particles, a particulate conductive magnetic material may be kneaded into a binder polymer and formed into particles containing the conductive magnetic material dispersed in the binder polymer, or the above conductive magnetic particles may be further coated with a resin. In this instance, the resistance of the coating resin layer is controlled by adjusting the content of a conductive agent such as carbon in the resin so that the resistance of the whole conductive magnetic particles is controlled.

In the present invention, as the conductive magnetic particles, those having an average particle diameter of from 1 to 100 µm may be used, and preferably those of from 5 to 50 µm are advantageous in view of both the charging performance and the maintenance of the particles.

In the present invention, the average particle diameter of the conductive magnetic particles is determined by randomly sampling at least 100 particles under a scanning electron microscope, calculating volume particle size distribution on the basis of maximum horizontal-direction chord length, and regarding its 50% average particle diameter as average particle diameter.

In the present invention, the conductive magnetic particles may preferably have a volume resistivity of $10^{10}$ $\Omega\cdot$cm or below, and more preferably from $10^6$ to $10^9$ $\Omega\cdot$cm. If the volume resistivity of the conductive magnetic particles exceeds $10^{10}$ $\Omega\cdot$cm, necessary electric current for charging may not flow, lowering the image quality due to the faulty charging.

In the present invention, the volume resistivity of the conductive magnetic particles is calculated and normalized from the electric currents flowing in a system wherein 2 g of the conductive magnetic particles 23 is filled in a cylindrical container with a bottom area of 228 mm$^2$ and pressed to which a voltage of 100 V is applied from top and bottom.

As to the magnetic properties, the conductive magnetic particles may preferably have a saturation magnetization of 30 Am$^2$/kg or above, and more preferably from 40 to 300 Am$^2$/kg. There are no particular limitations to the coercive force and residual magnetization.

In the present invention, the magnetization is measured using a vibration magnetometer VSM-3S-15 (manufactured by Toei Kogyo) under application of a magnetic field of 5 K oersteds, and the quantity of magnetization thus measured is regarded as saturation magnetization.

The constitution of the magnetic brush is not specifically limited to the above mentioned constitution in the present invention. The conductive magnetic particles may be directly supported on the magnet roll without using a sleeve, to carry out charging.

The constitution of the developing assembly 8, which is a one-component, weak magnetic toner developing assembly, will be described below.

As shown in Fig. 1, the developing assembly 8 serving as the developing means is constituted of a developer container 80 holding a weak magnetic toner 81, an aluminum sleeve 84 as a developing sleeve, internally provided with a magnet roll 83, and an elastic blade 82 provided in touch with the sleeve as a control means. The aluminum sleeve 84 has a surface of a desired roughness, and triboelectrically charges the weak magnetic toner 81 by the friction with the blade 82, where the sleeve is uniformly coated with the charged weak magnetic toner 81.

Although the developing assembly 8 is an example of a developing assembly using a one-component weak magnetic toner, the developing system is not limited to it. In the present invention, it is essential to use a magnetic toner having a lower magnetic binding force than that of conventional magnetic toners. The magnetic binding force of the toner increases as the magnetization quantity $\sigma$ (Am$^2$/kg), the weight average particle diameter (D$_4$) D (µm) and the density $\delta$ (g/cm$^3$) of the toner increase. When the value of $\sigma\cdot$D$\cdot\delta$ which is obtained by multiplying these three values is used as an index of the magnetic binding force of the toner, our experiments have revealed that the toner having controlled $\sigma\cdot$D$\cdot\delta$ value of 150 or less, which are conventionally as great as 250 to 400, can be normally transported at the time of development and also the magnetic toner once entered the magnetic brush charging assembly 2 can be unloaded from the brush, so that good image recording can be achieved.

More preferably, the value of $\sigma\cdot$D$\cdot\delta$ may be controlled within the range of from 50 to 150, whereby good images can be obtained, even when printing is carried out for a long time. Namely, the magnetic toner having slipped away or escaped from the cleaner can be immediately taken in and unloaded from the brush due to the appropriate magnetic binding force even when copying or printing is repeated.

In the present invention, the magnetic brush is not limited to the one to which only DC bias is applied. AC bias may be superimposed thereon so that the charging performance can be made more stable. In this case, the difference between DC component applied to the magnetic brush and the potential of the photosensitive member further decreases compared with the case when only DC bias is applied. Hence, the effect of the magnetic binding force is large and the magnetic toner can be well taken into the magnetic brush charging assembly.

In the present invention, the weak magnetic toner having a value of $\sigma \cdot D \cdot \delta$ of 150 or less can form dense and short toner ears, and consequently enables development in high density and minuteness.

The magnetic toner is obtained by mixing a known binder resin, magnetic particles and a charge control agent, followed by the steps of kneading, pulverization and classification, and addition of a fluidity-providing agent. The magnetic binding force of the magnetic toner can be controlled to an appropriate value by making the magnetic particles from a material of low magnetization or by adjusting the amount of the magnetic particles. What is important in the present invention is that, so long as the magnetic toner has a value of $\sigma \cdot D \cdot \delta$ of 150 or less, the magnetic toner having entered the magnetic brush charging assembly can be unloaded from the brush overcoming the magnetic bound of the magnetic brush, thereby preventing faulty charging and enabling maintenance of good image formation.

The operation of the image forming apparatus according to the first embodiment of the present invention is described below. A voltage of -700 V is applied to the sleeve 22 of the magnetic brush charging assembly 2 previously described, and the photosensitive drum 1 is charged to the same potential. Thereafter, in accordance with an image pattern, image areas are scanned using the exposure assembly 3 such as a laser scanner to form an electrostatic latent image on the photosensitive drum. Thereafter, a voltage produced by superimposing on a DC voltage of -500 V a rectangular wave AC voltage with a frequency of 1.8 kHz and a peak-to-peak voltage of 1.6 kV is applied to a developing sleeve 84 set stationary at a distance of 0.3 mm from the surface of the photosensitive drum, where, using a negatively triboelectrically charged magnetic toner 81 carried onto the developing sleeve 84, the latent image is developed in the presence of the electric field formed at the image areas. The toner image thus formed by development and held on the photosensitive drum is transferred to a recording medium P serving as the transfer medium which has been electrostatically charged on its back by means of the transfer charging assembly 5 serving as the transfer means. Then the toner image is fixed to the recording medium P by means of the fixing assembly 7 serving as the fixing means. In the transfer charging assembly 5, a transfer roller comprising a mandrel and a foam material layer of medium-resistance is used. A roller with a resistance value of $5 \times 10^8$ $\Omega$ is used and a voltage of +2.0 kV is applied to the mandrel to carry out the transfer. After the transfer, the magnetic toner remained on the photosensitive drum is scraped off by a cleaner 6 having a cleaning member 60, provided between the transfer zone and the charging zone and serving as the cleaning means, and the photosensitive drum is again electrostatically charged by means of the magnetic brush charging assembly 2. Images can be formed on the transfer medium by repeating the above procedure.

Since it is difficult to completely remove the magnetic toner remained on the photosensitive drum after the transfer by the cleaner 6 having the cleaning member 60, a very small quantity of the toner stands adhered to the surface of the photosensitive drum. When the drum is again charged using the magnetic brush charging assembly 2, the magnetic toner, if it is a conventional magnetic toner having a strong magnetic binding force, adheres to the magnetic brush to cause the problem of faulty charging. This is a phenomenon that the magnetic toner having penetrated in the conductive magnetic particles 23 blocks the conducting paths between the conductive magnetic particles 23 themselves and between the conductive magnetic particles 23 and the photosensitive drum, resulting in occurrence of faulty charging. Moreover, if the magnetic toner is present between the conductive magnetic particles 23 in a large quantity, the magnetic toner melt-adheres to the conductive magnetic particles 23 to greatly deteriorate the charging performance and it becomes difficult to continue charging over a long period of time. However, in the present invention, since the magnetic toner of weak magnetic properties is used, the magnetic toner entered the magnetic brush charging assembly 2 ismmediately provided with an appropriate triboelectricity of regular polarity and unloaded from the magnetic brush. Thus, faulty charging can be prevented and running performance can be improved.

When printing is continued for a long time, the magnetic toner having escaped from the cleaner becomes an obstacle to charging. During long printing, a certain quantity of the magnetic toner contaminates the magnetic brush, and as a result, the resistance of the magnetic brush charging assembly increases. Hence the magnetic toner present on the photosensitive drum hinders charging. In such a case, by imparting a certain quantity of magnetic binding force to the magnetic toner, the magnetic toner can be immediately taken into and unloaded from the magnetic brush, enabling continuous printing for a long period of time.

In the present invention, the object of the invention can be more advantageously achieved in the constitution where the charge injection layer is provided on the surface of the photosensitive member. A charge injection layer with a good surface lubricity contributes an increase in transfer efficiency of the magnetic toner and a decrease in quantity of the magnetic toner remaining after the transfer. Such a charge injection layer enables quick charging, and hence the potential difference between the magnetic brush charging assembly and the photosensitive member becomes smaller. Thus, control of the magnetic binding force at an appropriate value enables the toner to be more immediately taken in and unloaded.

As described above, in the present invention, so long as the value of σ·D·δ is 150 or less, and preferably from 50 to 150, the magnetic toner is immediately collected into the magnetic brush charging assembly and then unloaded from the magnetic brush, and thus good charging can be carried out without blocking the conducting path between the conductive magnetic particles themselves or between the conductive magnetic particles and the photosensitive drum.

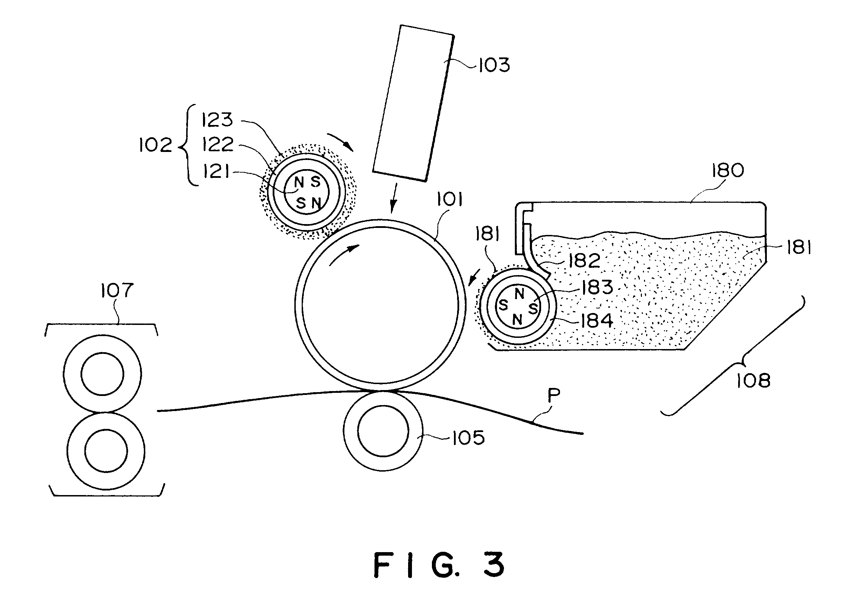

Fig. 3 schematically illustrates a second embodiment of the present invention. The image forming apparatus shown therein comprises a photosensitive drum 101 having a photosensitive layer which serves as the image bearing member, a magnetic brush charging assembly 102 as the charging means, an exposure assembly 103 as the latent image forming means, a developing assembly 108 as the developing means, a transfer charging assembly 105 as the transfer means, and a fixing assembly 107 as the fixing means provided around the drum. This image forming apparatus is a cleanerless image forming apparatus not equipped with a cleaner having a cleaning member. A cleanerless image forming apparatus employing the magnetic brush charging assembly 102 will be detailed here. The photosensitive drum 101 as the image bearing member has the same constitution as that of the photosensitive drum 1 used in the first embodiment.

The main constitution of the magnetic brush charging assembly 102 is similar to that of the first embodiment. The bias applied to the magnetic brush, however, is a negative DC voltage equal to the potential of the charging drum superimposed by a desired AC voltage. This makes it possible to recollect the magnetic toner remaining after the transfer on the photosensitive member and diffuse it again on the photosensitive member, and the photosensitive member can be charged.

Most of the magnetic toner remaining on the photosensitive drum after the transfer have reversed polarity, that is, positively charged. However, once it has passed through the magnetic brush, the magnetic toner has regular polarity, that is, negatively charged all alike. Accordingly, by controlling the bias of the developing assembly, the cleaning and development of the photosensitive drum can be simultaneously carried out by the developing assembly. For example, assume that charged drum potential is -700 V and post-exposure potential is -100 V, a DC voltage of -450 V superimposed by a desired AC voltage may be applied to a developing sleeve 184, whereby the magnetic toner at the unexposed area (non-image area) on the photosensitive drum is collected onto the developing sleeve and at the same time the exposed area (image area) are developed by the magnetic toner on the developing sleeve.

As the magnetic toner, it is suitable to use a spherical magnetic toner that can lessen the quantity of remaining toner after the toner image transfer. Such spherical magnetic toner has superior fluidity and has superior releasability between the toner particles themselves and between the toner and the photosensitive drum, promising high transfer efficiency.

In general, in the cleanerless image forming apparatus, the magnetic toner remaining after the transfer should pass through the magnetic brush charging assembly before it returns to the developing assembly, and hence the quantity of the magnetic toner taken into the magnetic brush charging assembly is larger than that in the image forming apparatus provided with a cleaner having a cleaning member. The use of the above spherical magnetic toner, however, as having a high transfer efficiency, can reduce the quantity of toner taken into the magnetic brush charging assembly to hardly deteriorate the magnetic brush.

In the present invention, the spherical magnetic toner refers to a toner having a toner shape coefficient SF-1 within the range of from 100 to 150, and SF-2, from 100 to 130.

This spherical magnetic toner may more preferably have a toner shape coefficient SF-1 within the range of from 100 to 145, and SF-2, from 100 to 125.

The SF-1 and SF-2, the shape coefficients as used in the present invention, are determined as follows: 100 particles of the toner are randomly selected under FE-SEM (S-800; a scanning electron microscope manufactured by Hitachi Ltd.) introducing their image information to an image analyzer (LUSEX-3; manufactured by Nikore Co.) via the interface for analysis, and then the shape coefficients SF-1 and SF-2 are calculated according to the following expression.

$$SF\text{-}1 = (MXLNG)_2/AREA \times \pi/4 \times 100$$

$$SF\text{-}2 = (PERI)_2/AREA \times 1/4\pi \times 100$$

(AREA: projected area of toner particle; MXLNG: absolute maximum length; PERI: peripheral length.

The shape coefficient SF-1 of the toner indicates the degree of sphericity; the greater the value is, the more amorphous (shapeless) the toner particles are rather than spherical. SF-2 indicates the degree of irregularity; the greater the value is, the more irregular the toner particle surfaces are.

The image forming apparatus according to the second embodiment of the present invention is operated as described below. To the magnetic brush charging assembly 102, a voltage produced by superimposing on a DC voltage of -700 V a rectangular wave AC voltage with a frequency of 1 kHz and a peak-to-peak voltage of 600 Vpp is applied, and the photosensitive member is charged to about -700 V by means of the magnetic brush. Thereafter, the imagewise exposure is carried out by the exposure assembly 103 to form an electrostatic latent image, which is then reverse-developed by means of the developing assembly 108. The toner image thus formed by development and held on the photosensitive member is transferred to a recording medium P, the transfer medium electrostatically charged on its back by means of the transfer charging assembly 105. Then the toner image thus transferred is fixed on the recording medium P by means of the fixing assembly 7 serving as the fixing means. The magnetic toner remaining after the transfer is carried on the photosensitive member and reaches the magnetic brush charging assembly 102. The magnetic brush charging assembly 102 takes the remaining magnetic toner off the surface of the photosensitive member, and at the same time electrostatically charges the photosensitive member to the desired potential.

In the present invention, the use of the weak magnetic toner having a lower magnetic binding force than that of the conventional ones enables immediate collection of the magnetic toner into and unloading of it from the magnetic brush even in the cleanerless constitution where the magnetic toner remaining after the transfer enters the magnetic brush in a large quantity, whereby the amount of the magnetic toner present in the magnetic brush is limited, thus the performance of the magnetic brush is maintained and the photosensitive member is properly charged for good image formation.

In the cleanerless constitution where the magnetic toner remaining after the transfer enters the magnetic brush charging assembly in a large quantity, the employment of the constitution according to the present invention is greatly effective, since the circulation of the toner is promoted making the toner accumulation difficult, avoiding the contamination of the magnetic brush, due to the appropriate magnetic binding force of the toner, which results in the maintenance of the charging performance over a long period of time.

In both the first and second embodiments described above, the transfer medium to which the developed toner image on the image bearing member is transferred, was described as a recording medium such as paper, i.e., a final transfer medium. In the present invention, it is also possible to use a belt- or pipe-type intermediate transfer medium as the transfer medium, where such an intermediate transfer medium is provided opposingly to the image bearing member, and, after the toner image on the image bearing member has been transferred to this intermediate transfer medium, the toner image is again transferred to the final transfer medium.

When the intermediate transfer medium is used, the transfer step becomes plural and hence it is preferable to use the spherical magnetic toner having a better transfer efficiency.

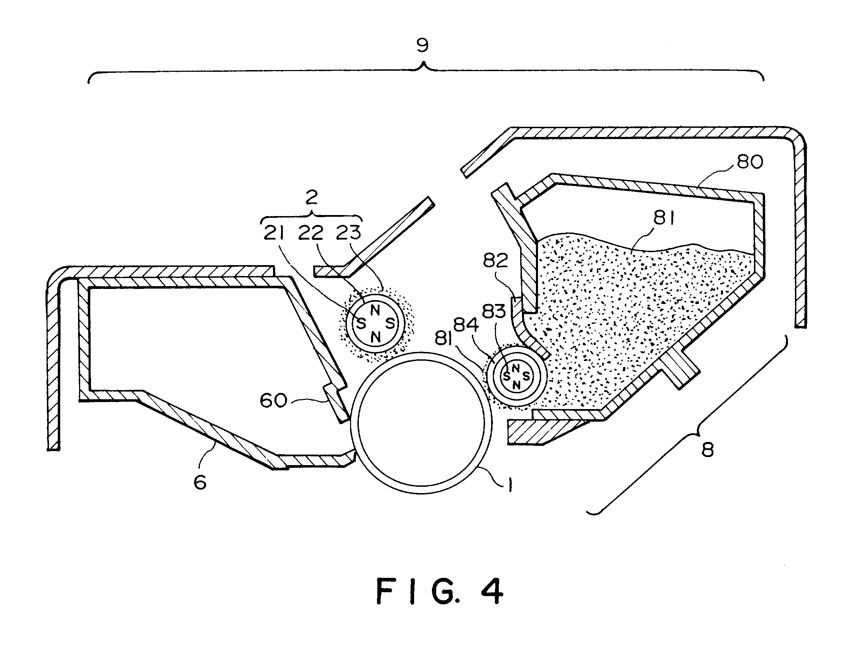

Fig. 4 illustrates a process cartridge according to the first embodiment of the present invention. To explain this process cartridge according to the first embodiment, the constituent members having the same functions as in the image forming apparatus described with reference to Fig. 1 are denoted by the same reference numerals.

In the process cartridge of the present invention, at least the charging means, the developing means and the image bearing member are integrated into a cartridge, and this process cartridge is provided detachably in the main body of the image forming apparatus (e.g., a copying machine, a laser beam printer or a facsimile machine).

In this embodiment, exemplified is a process cartridge 9 in which a developing means 8, a drum-type image bearing member (a photosensitive drum) 1, a cleaning means 6 having a cleaning blade 60 and a charging means (a magnetic brush charging assembly) 2 are joined into one unit.

In this embodiment, the developing means 8 has an elastic blade 82 and a magnetic toner 81 in a developer container 80. At the time of development, a given electric field is formed across the photosensitive drum 1 and the developing sleeve 84 by applying a development bias voltage from a bias applying means, to carry out the developing step by the use of the magnetic toner 81. In order to preferably carried out this developing step, the distance between the photosensitive drum 1 and the developing sleeve 84 is very important.

In the above embodiment, explained is a process cartridge in which the four constituents, the developing means, the image bearing member, the cleaning means and the charging means are joined into one unit. In the present invention, however, the embodiment is a process cartridge comprising at least three constituents, the charging means, the developing means and the image bearing member joined into one unit. Thus, the cleaning means may be provided in the main body of the image forming apparatus, and accordingly the process cartridge may not necessarily contain the cleaning means. It is also possible to add other constituent(s) so as to be joined together into one unit as a cartridge.

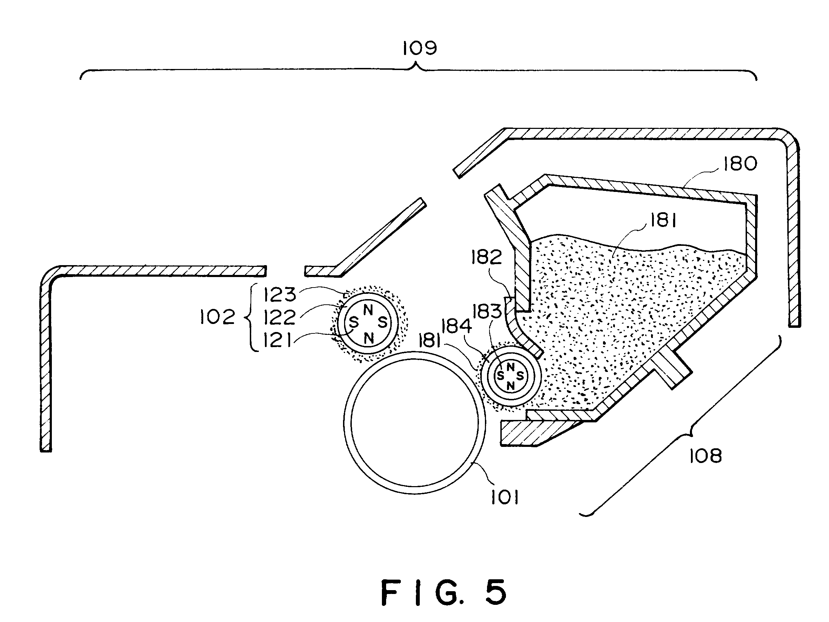

Fig. 5 illustrates a process cartridge according to a second embodiment of the present invention. In the description of this process cartridge according to the second embodiment, the constituent members having the same functions as in the image forming apparatus described with reference to Fig. 3 are denoted by the same reference numerals.

In the process cartridge according to the second embodiment of the present invention, exemplified is a process cartridge 109 in which a developing means 108, a drum-type image bearing member (a photosensitive drum) 101 and a charging means (a magnetic brush charging assembly) 102 are joined into one unit. That is, this process cartridge has the cleanerless constitution where the developing means 108 collects the magnetic toner remaining after the transfer, and carries out the development at the same time.

As described above, according to the present invention, by using a magnetic toner having $\sigma \cdot D \cdot \delta$ of 150 or less, which is an index of the magnetic binding force of magnetic toners, the toner is immediately collected in and unloaded from the magnetic brush charging assembly, preventing the accumulation of the magnetic toner migrated from the image bearing member and entered the magnetic brush. Thus, the problem of faulty charging that is caused by the accumulation of the magnetic toners can be settled and no faulty images results.

EXAMPLES

Examples 1

As the image forming apparatus of the first embodiment as shown in Fig. 1, the following magnetic brush charging assembly, photosensitive drum and magnetic toner were used, and images were formed on 5,000 sheets under the following bias conditions to make evaluation of images. Results of the evaluation are shown in Table 1.

- Magnetic Brush Charging Assembly -

In the magnetic brush charging assembly, as the conductive magnetic particles used were ferrite particles with an average particle diameter of 15 $\mu$m, a volume resistivity of 1 x $10^6$ $\Omega \cdot$cm and a saturation magnetization of 58 $Am^2$/kg in a magnetic field of 1 K oersted. The diameter of the magnetic roll of the magnetic brush charging assembly is 13.9 mm and the number of the magnetic poles of the magnetic roll is 4, and the peak of the magnetic force is set at an angle of 4° in the rotational direction of the photosensitive drum, measuring from the line connecting the centers of the photosensitive drum and the magnetic brush charging assembly. The strength of the magnetic force on the surface of the magnetic brush charging assembly was 850 gauss. As the charging bias, a voltage produced by superimposing on a DC voltage of -700 V a rectangular wave AC voltage with a frequency of 1 kHz and a peak-to-peak voltage of 600 Vpp was applied and the photosensitive drum was charged to -700 V, at a peripheral speed of 100 mm/sec.

- Photosensitive Drum -

On the surface of an OPC drum comprising an aluminum substrate and a subbing layer, a positive charge injection blocking layer, a charge generation layer and a charge transport layer superposed in this order, a charge injection layer was provided by applying a dispersion prepared by dispersing 60 parts by weight of ultrafine $Sn0_2$ particles with an average particle diameter of 0.03 $\mu$m as a conductive fine particles in 100 parts by weight of a photocurable acrylic resin. The photosensitive drum was rotated at a peripheral speed of 100 mm/sec.

- Magnetic Toner -

Thirty parts by weight of magnetite having a magnetization quantity of 60 $Am^2$/kg in a magnetic field of 1 K oersted and 100 parts by weight of a styrene-acrylic resin were melt-kneaded, followed by pulverization and classification to obtain magnetic toner particles having the magnetization quantity ó, weight average particle diameter D and density $\delta$ as shown in Table 1. One hundred parts by weight of the magnetic toner particles and 0.8 part by weight of the hydrophobic fine silica powder were mixed to prepare the magnetic toner. The volume resistivity of the magnetic toner was $10^{14}$ $\Omega \cdot$cm or more.

As the development bias, a voltage produced by wave AC voltage with a frequency of 2 kHz and a peak-to-peak voltage of 1.6 kV was applied.

In the image evaluation in the present Example 1, charging ghost is an evaluation item to judge the charging performance after exposure of the photosensitive member from the formed image. If the charging performance becomes poor, the charge potential at the exposed area in the previous cycle becomes lower than that at the unexposed area, so that a ghost appears in the image. Thus, this ghost phenomenon was observed through the running test, and the images were evaluated according to the following evaluation criteria.

(Evaluation Criteria)

AA: No ghost is seen in white solid areas and halftone areas, showing good results.

A: Ghost is not seen in white solid areas but slightly seen in halftone areas.
B: Ghost is not seen in white solid areas but clearly seen in halftone areas.

C: Ghost is seen in both white solid areas and halftone areas.

Example 2

A magnetic toner having properties as shown in Table 1 was produced in the same manner as in Example 1 except that the content of the magnetite in the magnetic toner was changed to 15 parts by weight. Images were formed and evaluated in the same manner as in Example 1. Results of the evaluation are shown in Table 1.

Example 3

A magnetic toner was obtained in the same manner as in Example 1 except that the magnetite used therein was replaced with 30 parts by weight of a magnetite doped with Mn in a large quantity, having a magnetization quantity of 30 $Am^2$/kg in a magnetic field of 1 K oersted. Images were formed and evaluated in the same manner as in Example 1.
Results of the evaluation are shown in Table 1.

Example 4

A magnetic toner was obtained in the same manner as in Example 1 except that the magnetite used therein was replaced with 30 parts by weight of nickel ferrite having a magnetization quantity of 70 $Am^2$/kg in a magnetic field of 1 K oersted. Images were formed and evaluated in the same manner as in Example 1.
Results of the evaluation are shown in Table 1.

Example 5

In the production of the magnetic toner used in Example 1, pulverization and classification conditions were changed to obtain a magnetic toner with a weight average particle diameter of 8.2 μm. Images were formed and evaluated in the same manner as in Example 1.
Results of the evaluation are shown in Table 1.

Example 6

A magnetic toner was obtained in the same manner as in Example 1 except that the magnetite used therein was replaced with 100 parts by weight of a magnetite doped with Mn in a large quantity, having a magnetization quantity of 30 $Am^2$/kg in a magnetic field of 1 K oersted. Images were formed and evaluated in the same manner as in Example 1.
Results of the evaluation are shown in Table 1.

Comparative Example 1

A magnetic toner having properties as shown in Table 1 was obtained in the same manner as in Example 1 except that the content of the magnetite in the magnetic toner used therein was changed to 100 parts by weight. Images were formed and evaluated in the same manner as in Example 1. Results of the evaluation are shown in Table 1.

Comparative Example 2

A magnetic toner was obtained in the same manner as in Example 1 except that the magnetite used therein was replaced with 100 parts by weight of nickel ferrite having a magnetization quantity of 70 $Am^2$/kg in a magnetic field of 1 K oersted. Images were formed and evaluated in the same manner as in Example 1.
Results of the evaluation are shown in Table 1.

Comparative Example 3

A magnetic toner was obtained in the same manner as in Example 1 except that the magnetite used therein was replaced with 200 parts by weight of magnetite doped with a large quantity of Mn, having a magnetization quantity of 30 $Am^2$/kg in a magnetic field of 1 K oersted. Images were formed and evaluated in the same manner as in Example 1.
Results of the evaluation are shown in Table 1.

Comparative Example 4

In the production of the magnetic toner used in Example 1, pulverization and classification conditions were changed to obtain a magnetic toner with a weight average particle diameter of 9.0 μm. Images were formed and evaluated in the same manner as in Example 1. Ghost phenomenon was worsened and minuteness of the image was lessened because of the large toner diameter.

Results of the evaluation are shown in Table 1.

Example 7

Images were formed and evaluated in the same manner as in Example 1 except that the charging bias applied therein was a DC voltage of -700V. As a result, although ghost phenomenon was a little worsened compared with Example 1, it was possible to obtain images comparable to those in Example 1.

Table 1

| | Toner | | | Charging ghost, image evaluation | | | |
|---|---|---|---|---|---|---|---|
| Material: content (pbw) | Production process | $\sigma \cdot D \cdot \delta$ | | Initial stage | After 1,000sh. | After 2,000sh. | After 5,000sh. |

Example:

| | | | | | | | |
|---|---|---|---|---|---|---|---|
| 1 | Resin: 100 Magnetite: 30 | Pulverization | 108 $\sigma=15$ D=6 $\delta=1.2$ | AA | AA | A | A |
| 2 | Resin: 100 Magnetite: 15 | Pulverization | 46 $\sigma=7$ D=6 $\delta=1.1$ | AA | AA | A | B |
| 3 | Resin: 100 Mn-doped magnetite: 30 | Pulverization | 72 $\sigma=10$ D=6 $\delta=1.2$ | AA | AA | A | A |
| 4 | Resin: 100 Nichekl ferrite: 70 | Pulverization | 145 $\sigma=20$ D=5 $\delta=1.45$ | AA | A | A | B |
| 5 | Resin: 100 Magnetite: 30 | Pulverization | 147.6 $\sigma=15$ D=8.2 $\delta=1.2$ | AA | AA | A | B |
| 6 | Resin: 100 Mn-doped magnetite: 100 | Pulverization | 144 $\sigma=15$ D=6 $\delta=1.6$ | AA | A | A | B |

EP 0 709 746 B1

Table 1 (cont'd)

| Toner | | | | Charging ghost, image evaluation | | | |
|---|---|---|---|---|---|---|---|
| Material: content (pbw) | | Production process | σ·D·δ | Initial stage | After 1,000sh. | After 2,000sh. | After 5,000sh. |
| Comparative Example: | | | | | | | |
| 1 | Resin: 100 Magnetite: 100 | Pulveri-zation | 288 σ=30 D=6 δ=1.6 | AA | A | B | C |
| 2 | Resin: 100 Nickel ferrite: 100 | Pulveri-zation | 384 σ=40 D=6 δ=1.6 | A | B | C | C |
| 3 | Resin: 100 Mn-doped magnetite: 200 | Pulveri-zation | 360 σ=30 D=6 δ=2.0 | A | B | C | C |
| 4 | Resin: 100 Magnetite: 15 | Pulveri-zation | 162 σ=15 D=9.0 δ=1.2 | AA | AA | B | C |

EP 0 709 746 B1

Example 8

In the image forming apparatus of the second embodiment as shown in Fig. 3, the same magnetic brush charging assembly and photosensitive drum as used in Example 1 and the following magnetic toner were used, and images were formed on 5,000 sheets to make evaluation of the images. Results of the evaluation are shown in Table 2.

- Magnetic Toner -

Thirty parts by weight of a magnetite with a magnetization quantity of 60 Am$^2$/kg in a magnetic field of 1 K oersted and 100 parts by weight of a styrene-acrylic resin were melt-kneaded, followed by pulverization and classification, and heat treatment to obtain a spherical magnetic toner having the magnetization quantity σ, weight average particle diameter D, density δ and SF-1, SF-2 as shown in Table 2.

As the development bias, a voltage produced by superimposing on a DC voltage of -400 V a rectangular wave AC voltage with a frequency of 2 kHz and a peak-to-peak voltage of 1.6 kV was applied. In the cleanerless constitution, the magnetic toner remaining after the transfer is collected by the developing means simultaneously during the development.

In the image evaluation in the present Example 8, ghost phenomenon was evaluated in the same manner as in Example 1.

Example 9

A spherical magnetic toner having physical properties as shown in Table 2 was produced in the same manner as in Example 8 except that the content of the magnetite in the spherical magnetic toner used therein was changed to 15 parts by weight. Images were formed and evaluated in the same manner as in Example 8. Results of the evaluation are shown in Table 2.

Example 10

A spherical magnetic toner having physical properties as shown in Table 2 was produced in the same manner as in Example 8 except that the heating treatment to obtain a spherical magnetic toner was not carried out. Images were formed and evaluated in the same manner as in Example 8. Results of the evaluation are shown in Table 2.

Example 11

A magnetic toner was obtained in the same manner as in Example 8 except that the magnetite used therein was replaced with 30 parts by weight of a magnetite doped with a large quantity of Mn having a magnetization quantity of 30 Am$^2$/kg in a magnetic field of 1 K oersted. Images were formed and evaluated in the same manner as in Example 8.

Results of the evaluation are shown in Table 2.

Example 12

A magnetic toner was obtained in the same manner as in Example 8 except that the magnetite used therein was replaced with 30 parts by weight of nickel ferrite having a magnetization quantity of 70 Am$^2$/kg in a magnetic field of 1 K oersted. Images were formed and evaluated in the same manner as in Example 8.

Results of the evaluation are shown in Table 2.

Example 13

In the production of the magnetic toner used in Example 8, pulverization and classification conditions were changed to obtain a magnetic toner with a weight average particle diameter of 8.1 μm. Images were formed and evaluated in the same manner as in Example 8.

Results of the evaluation are shown in Table 2.

Example 14

A magnetic toner was obtained in the same manner as in Example 8 except that the magnetite used therein was replaced with 100 parts by weight of a magnetite doped with a large quantity of Mn, having a magnetization quantity of 30 Am$^2$/kg in a magnetic field of 1 K oersted. Images were formed and evaluated in the same manner as in Example 8.

Results of the evaluation are shown in Table 2.

Comparative Example 5

A spherical magnetic toner having physical properties as shown in Table 2 was produced in the same manner as in Example 8 except that the content of the magnetite in the spherical magnetic toner used therein was changed to 100 parts by weight. Images were formed and evaluated in the same manner as in Example 8. Results of the evaluation are shown in Table 2.

Comparative Example 6

A magnetic toner was obtained in the same manner as in Example 8 except that the magnetite used therein was replaced with 100 parts by weight of nickel ferrite having a magnetization quantity of 70 Am$^2$/kg in a magnetic field of 1 K oersted. Images were formed and evaluated in the same manner as in Example 8.
Results of the evaluation are shown in Table 2.

Comparative Example 7

A magnetic toner was obtained in the same manner as in Example 8 except that the magnetite used therein was replaced with 200 parts by weight of a magnetite doped with a large quantity of Mn, having a magnetization quantity of 30 Am$^2$/kg in a magnetic field of 1 K oersted. Images were formed and evaluated in the same manner as in Example 8.
Results of the evaluation are shown in Table 2.

Comparative Example 8

In the production of the magnetic toner used in Example 8, pulverization and classification conditions were changed to obtain a magnetic toner with a weight average particle diameter of 8.9 μm. Images were formed and evaluated in the same manner as in Example 8.
Results of the evaluation are shown in Table 2.

Example 15

Images were formed and evaluated in the same manner as in Example 8 except that the charging bias applied therein was replaced with only a DC voltage of -700V. As a result, although ghost phenomenon was observed after running on a small number of sheets compared with Example 8, it did not lower to the level "C".

Table 2

| | Toner | | | | | Charging ghost, image evaluation | | | |
|---|---|---|---|---|---|---|---|---|---|
| | Material: content (pbw) | Production process | σ·D·δ | SF-1 | SF-2 | Initial stage | After 1,000 sheets | After 2,000 sheets | After 5,000 sheets |
| Example: | | | | | | | | | |
| 8 | Resin: 100 Magnetite: 30 | Pulverization & heat treatment | 108 σ=15 D=6 δ=1.2 | 140 | 125 | AA | AA | A | A |
| 9 | Resin: 100 Magnetite: 15 | Pulverization & heat treatment | 46 σ=7 D=6 δ=1.1 | 140 | 125 | AA | AA | A | B |
| 10 | Resin: 100 Magnetite: 30 | Pulverization | 108 σ=15 D=6 δ=1.2 | 155 | 145 | AA | A | B | B |
| 11 | Resin: 100 Mn-doped magnetite: 30 | Pulverization & heat treatment | 72 σ=10 D=6 δ=1.2 | 140 | 125 | AA | AA | A | A |
| 12 | Resin: 100 Nickel ferrite: 70 | Pulverization & heat treatment | 145 σ=20 D=5 δ=1.45 | 140 | 125 | AA | A | A | B |
| 13 | Resin: 100 Magnetite: 30 | Pulverization & heat treatment | 145.8 σ=15 D=8.1 δ=1.2 | 140 | 125 | AA | AA | A | B |

Table 2 (cont'd)

| Toner | | | | | | Charging ghost, image evaluation | | | |
|---|---|---|---|---|---|---|---|---|---|
| Material: content (pbw) | Production process | $\sigma \cdot D \cdot \delta$ | SF-1 | SF-2 | | Initial stage | After 1,000 sheets | After 2,000 sheets | After 5,000 sheets |

Example:
| | | | | | | | | | |
|---|---|---|---|---|---|---|---|---|---|
| 14 | Resin: 100 Mn-doped magnetite: 100 | Pulverization & heat treatment | 144 $\sigma=15$ D=6 $\delta=1.6$ | 140 | 125 | AA | A | A | B |

Comparative Example:
| | | | | | | | | | |
|---|---|---|---|---|---|---|---|---|---|
| 5 | Resin: 100 Magnetite: 100 | Pulverization & heat treatment | 288 $\sigma=30$ D=6 $\delta=1.6$ | 140 | 125 | AA | B | C | C |
| 6 | Resin: 100 Nickel ferrite: 100 | Pulverization & heat treatment | 384 $\sigma=40$ D=6 $\delta=1.6$ | 140 | 125 | A | A | B | C |
| 7 | Resin: 100 Mn-doped magnetite: 200 | Pulverization & heat treatment | 360 $\sigma=30$ D=6 $\delta=2.0$ | 140 | 125 | A | B | C | C |
| 8 | Resin: 100 Magnetite: 15 | Pulverization & heat treatment | 160.2 $\sigma=15$ D=8.9 $\delta=1.2$ | 140 | 125 | AA | A | B | C |

\* Heat treatment for spheration

EP 0 709 746 B1

**Claims**

1. An image forming method comprising:

electrostatically charging an image bearer member (1) by a charging means (2);
forming an electrostatic latent image on the image bearer member thus charged, by a latent image forming means (3);
developing the electrostatic latent image with a magnetic toner (81) to form a toner image; and
transferring the toner image to a transfer medium (P);
wherein:
said charging means (2) comprises a charging assembly having a magnetic brush formed from conductive magnetic particles (23) magnetically bound on a sleeve (22) ; said magnetic brush of said charging assembly contacting the image bearer member and being capable of electrostatically charging the surface of the image bearer member by directly injecting charges into the surface of the image bearer member;
said magnetic toner (81) has a value of $\sigma \cdot D \cdot \delta$ of 150 or less, the value being obtained by multiplying i) a magnetization quantity $\sigma$ ($Am^2/kg$) in a magnetic field of 1 K oersted as measured by a vibration magnetometer, ii) a weight average particle diameter ($D_4$) D ($\mu m$) of the magnetic toner and iii) a density $\delta$ ($g/cm^3$) thereof; and the charging means (2) and the magnetic toner (81) being such that any magnetic toner (81) entering the magnetic brush of the charging means (2) is unloaded onto the image bearer member (1).

2. An image forming method according to claim 1, wherein said image bearer (1) member is charged by applying a direct current voltage to said magnetic brush charging assembly (2).

3. An image forming method according to claim 1, wherein said image bearer member (1) is charged by applying a voltage produced by superimposing an alternating current voltage on a direct current voltage, to said magnetic brush charging assembly (2).

4. An image forming method according to any of claims 1 to 3 wherein said transfer medium (P) to which the toner image is transferred is a final transfer medium.

5. An image forming method according to any of claims 1 to 3, wherein said transfer medium (P) to which the toner image is transferred is an intermediate transfer medium.

6. An image forming method according to claim 5, wherein the toner image transferred to said intermediate transfer medium is again transferred to a final transfer medium.

7. An image forming method according to any of the preceding claims 1 to 6, wherein magnetic toner (81) retained on said image bearer member (1) after transfer of the image enters said magnetic brush charging assembly (2) and thereafter is unloaded from the magnetic brush charging assembly (2).

8. An image forming method according to claim 7, wherein magnetic toner unloaded from the magnetic brush charging assembly is simultaneously removed during development by a developing means (8) that develops the electrostatic latent image on the image bearer member with the magnetic toner.

9. An image forming method according to any of the preceding claims, wherein at least a part of the toner retained on said image bearer member after the transfer is removed by a cleaning means (6) provided between an image transfer zone (5) and a charging zone (2) and magnetic toner not removed by the cleaning means (6) enters said magnetic brush charging assembly (2) and thereafter is unloaded from the magnetic brush charging assembly (2).

10. An image forming method according to any of the preceding claims, wherein the magnetic brush charging assembly (2) comprises a non-magnetic sleeve (22), a magnetic roll (21) provided inside the non-magnetic sleeve and conductive magnetic particles (23) magnetically bound to a surface of the non-magnetic sleeve.

11. An image forming method according to claim 10, wherein the magnetic brush charging assembly has a magnetic strength of 400-1500 gauss on the non-magnetic sleeve (22) surface.

12. An image forming method according to claim 10, wherein the magnetic brush charging assembly has a magnetic strength of 600-1300 gauss on the non-magnetic sleeve (22) surface.

**13.** An image forming method according to claim 10, wherein the magnet roll (21) has two or more magnetic poles.

**14.** An image forming method according to claim 10, wherein the image bearer member comprises a photosensitive drum, and magnetic poles of the magnet roll (21) are set in the magnetic brush charging assembly so that a peak of a magnetic force may be present within an angle of 20°, in a rotation direction of the photosensitive drum, measuring from a line connecting centers of the photosensitive drum and the magnetic brush charging assembly.

**15.** An image forming method according to claim 10, wherein the image bearer member comprises a photosensitive drum (1), and magnetic poles of the magnet roll (21) are set in the magnetic brush charging assembly so that a peak of a magnetic force may be present within an angle of 10°, in a rotation direction of the photosensitive drum, measuring from a line connecting centers of the photosensitive drum and the magnetic brush charging assembly.

**16.** An image forming method according to claim 10, wherein the image bearer member comprises a photosensitive drum, and the magnetic brush charging assembly rotates in the same direction as the photosensitive drum.

**17.** An image forming method according to claim 16, wherein rotation of the magnetic brush charging assembly is achieved by fixing the magnet roll (21) and rotating the non-magnetic sleeve (22).

**18.** An image forming method according to claim 16, wherein the photosensitive drum (1) and the magnetic brush charging assembly (2) rotate with the same peripheral speed.

**19.** An image forming apparatus comprising:

an image bearer member (1) for bearing an electrostatic latent image:
a charging means (2) for electrostatically charging the image bearer member;
a latent image forming means (3) for forming an electrostatic latent image on the charged image bearer member (1);
a developing means (8) holding a magnetic toner (81), for rendering the electrostatic latent image visible by development to form a toner image; and
a transfer means (5) for transferring the toner image to a transfer medium;
wherein:
said charging means (2) comprises a charging assembly having a magnetic brush formed of conductive magnetic particles (23) magnetically bound on a sleeve (22); said magnetic brush of said charging assembly contacting the image bearer member and being capable of electrostatically charging the surface of the image bearer member by directly injecting charges into the surface of the image bearer member; and
said magnetic toner (81) has a value of σ•D•δ of 150 or less, said value being obtained by multiplying i) a magnetization quantity a ($Am^2/kg$) in a magnetic field of 1 K oersted as measured by a vibration magnetometer, ii) a weight average particle diameter ($D_4$) D (μm) of the magnetic toner and iii) a density δ ($g/cm^3$) thereof.

**20.** An image forming apparatus according to claim 19, wherein the magnetic brush charging assembly (2) is adapted to unload toner particles (81) remaining on the image bearer (1) member after image transfer and entering the charging assembly (2).

**21.** An image forming apparatus according to claim 20, wherein the developing means (8) is adapted to remove from the image bearer member (1) any toner particles (81) unloaded from the magnetic brush charging assembly (2).

**22.** An image forming apparatus according to claim 20 or claim 21, having a cleaning means (6), for removing magnetic toner retained on said image bearer member (1) after image transfer, the cleaning means (6) being located between said image transfer means (5) and said charging means (2).

**23.** An image forming apparatus according to any of the preceding claims 19 to 22, wherein the magnetic brush charging assembly (2) comprises a non-magnetic sleeve (22), a magnet roll (21) provided inside the non-magnetic sleeve and conductive magnetic particles (23) magnetically bound to a surface of the non-magnetic sleeve.

**24.** An image forming apparatus according to claim 23, wherein the magnetic brush charging assembly (2) has a magnetic strength of 400-1500 gauss on the non-magnetic sleeve (22) surface.

**25.** An image forming apparatus according to claim 23, wherein the magnetic brush charging assembly (2) has a magnetic strength of 600-1300 gauss on the non-magnetic sleeve (22) surface.

26. An image forming apparatus according to claim 23, wherein the magnet roll (21) has two or more magnetic poles.

27. An image forming apparatus according to claim 23, wherein said image bearer member (1) comprises a photosensitive drum, and magnetic poles of the magnet roll (21) are set in the magnetic brush charging assembly (2) so that a peak of a magnetic force may be present within an angle of 20°, in a rotation direction of the photosensitive drum, measuring from a line connecting centers of the photosensitive drum (1) and the magnetic brush charging assembly (2).

28. An image forming apparatus according to claim 23, wherein said image bearer member (1) comprises a photosensitive drum, and magnetic poles of the magnet roll (21) are set in the magnetic brush charging assembly (2) so that a peak of a magnetic force may be present within an angle of 10°, in a rotation direction of the photosensitive drum, measuring from a line connecting centers of the photosensitive drum (1) and the magnetic brush charging assembly (2).

29. An image forming apparatus according to claim 23, wherein said image bearer member comprises a photosensitive drum (1), and the magnetic brush charging assembly (2) rotates in a same direction as the photosensitive drum.

30. An image forming apparatus according to claim 29, wherein rotation of the magnetic brush charging assembly (2) is achieved by fixing the magnet roll (21) and rotating the non-magnetic sleeve (22).

31. An image forming apparatus according to claim 29, wherein the photosensitive drum (1) and the magnetic brush charging assembly (2) rotate with the same peripheral speed.

32. A process cartridge detachably mountable to a main assembly of an image forming apparatus, comprising:

an image bearer member (1) for bearing an electrostatic latent image;
a charging means (2) for electrostatically charging the image bearer member; and
a developing means (8) holding a magnetic toner (81), for rendering visible the electrostatic latent image held on the image bearer member, by development to form a toner image;
wherein:
said charging means (2) comprises a charging assembly having a magnetic brush formed of conductive magnetic particles (23) magnetically bound on a sleeve (22); said magnetic brush of said charging assembly contacting the image bearer member (1) and being capable of electrostatically charging the surface of the image bearer member by directly injecting charges into the surface of the image bearer member; and
said magnetic toner has a value of σ•D•δ of 150 or less, said value being obtained by multiplying i) a magnetization quantity σ (Am$^2$/kg) in a magnetic field of 1 K oersted as measured by a vibration magnetometer, ii) a weight average particle diameter ($D_4$) D (μm) of the magnetic toner and iii) a density δ (g/cm$^3$) thereof.

33. A process cartridge according to claim 32, wherein the magnetic brush charging assembly (2) is adapted to unload toner particles (81) remaining on the image bearer (1) member after image transfer and entering the charging assembly (2).

34. A process cartridge according to claim 33, wherein the developing means (8) is adapted to remove from the image bearer member (1) any toner particles (81) unloaded from the magnetic brush charging assembly (2).

35. A process cartridge according to claim 32 or claim 33, having a cleaning means (6), preceding said charging means (2), for removing magnetic toner (81) retained on said image bearer member (1) following image transfer.

36. A process cartridge according to any of the preceding claims 32 to 35, wherein the magnetic brush charging assembly (2) comprises a non-magnetic sleeve (22), a magnet roll (21) provided inside the non-magnetic sleeve and conductive magnetic particles (23) magnetically bound to a surface of the non-magnetic sleeve.

37. A process cartridge according to claim 36, wherein the magnetic brush charging assembly (2) has a magnetic strength of 400-1500 gauss on the non-magnetic sleeve surface.

38. A process cartridge according to claim 36, wherein the magnetic brush charging assembly (2) has a magnetic strength of 600-1300 gauss on the non-magnetic sleeve (22) surface.

39. A process cartridge according to claim 36, wherein the magnet roll (21) has two or more magnetic poles.

40. The process cartridge according to claim 36, wherein said image bearer member comprises a photosensitive drum (1), and magnetic poles of the magnet roll (21) are set in the magnetic brush charging assembly (2) so that a peak of a magnetic force is present within an angle of 20°, in a rotation direction of the photosensitive drum, measuring from a line connecting centers of the photosensitive drum (1) and the magnetic brush charging assembly (2).

41. The process cartridge according to claim 36, wherein said image bearer member comprises a photosensitive drum (1), and magnetic poles of the magnet roll (21) are set in the magnetic brush charging assembly (2) so that a peak of a magnetic force may be present within an angle of 10°, in a rotation direction of the photosensitive drum, measuring from a line connecting centers of the photosensitive drum (1) and the magnetic brush charging assembly (2).

42. The process cartridge according to claim 36, wherein said image bearer member (1) comprises a photosensitive drum, and the magnetic brush charging assembly (2) rotates in the same direction as the photosensitive drum.

43. The process cartridge according to claim 42, wherein rotation of the magnetic brush charging assembly (2) is achieved by fixing the magnet roll (21) and rotating the non-magnetic sleeve (22).

44. The process cartridge according to claim 42, wherein the photosensitive drum (1) and the magnetic brush charging assembly (2) rotate with the same peripheral speed.

45. A method according to any of claims 1 to 18, an apparatus according to any of claims 19 to 31, or a process cartridge according to any of claims 32 to 44, wherein said magnetic toner (81) has a value of $\sigma \cdot D \cdot \delta$ within a range of from 50 to 150.

46. A method, an apparatus, or a process cartridge according to claim 45, wherein said magnetic toner (81) has a value of $\sigma \cdot D \cdot \delta$ within a range of from 100 to 130.

47. A method according to any of claims 1 to 18, 45, 46; an apparatus according to any of claims 19 to 31, or 45 or 46; or a process cartridge according to any of claims 32 to 46, wherein said magnetic toner (81) has a magnetization quantity a of from 10 $Am^2/kg$ to 30 $Am^2/kg$.

48. A method, an apparatus, or a process cartridge according to claim 47, wherein said magnetic toner (81) has a magnetization quantity $\sigma$ of from 10 $Am^2/kg$ to 20 $Am^2/kg$.

49. A method according to any of claims 1 to 18 or 45 to 48, an apparatus according to any of claims 19 to 31 or 45 to 48, or a process cartridge according to any of claims 32 to 48, wherein said magnetic toner (81) has a weight average particle diameter D of from 2 μm to 20 μm.

50. A method, an apparatus, or a process cartridge according to claim 49, wherein said magnetic toner (81) has a weight average particle diameter D of from 4 μm to 8 μm.

51. A method according to any of claims 1 to 8, 18, or 45 to 50, an apparatus according to any of claims 19 to 31, or 45 to 50, or a process cartridge according to any of claims 32 to 50, wherein said magnetic toner (81) has a density 6 of from 1.1 to 2.0.

52. A method, an apparatus, or a process cartridge according to claim 51, wherein said magnetic toner (81) has a density δ of from 1.1 to 1.6.

53. A method according to any of claims 1 to 18 or 45 to 52, an apparatus according to any of claims 19 to 31, or 45 to 52, or a process cartridge according to any of claims 32 to 52, wherein said magnetic toner (81) has a volume resistivity of $10^9$ Ω ·cm or more.

54. A method, an apparatus, or a process cartridge according to claim 53, wherein said magnetic toner (81) has a volume resistivity of $10^{10}$ Ω ·cm or more.

**55.** A method according to any of claims 1 to 18 or 45 to 54, an apparatus according to any of claims 19 to 31 or 45 to 54, or a process cartridge according to any of claims 32 to 54, wherein said magnetic toner (81) is a spherical magnetic toner.

**56.** A method, an apparatus, or a process cartridge according to claim 55, wherein said spherical magnetic toner (81) has a shape coefficient SF-1 of from 100 to 150 and SF-2 of from 100 to 130.

**57.** A method, an apparatus, or a process cartridge according to claim 55, wherein said spherical magnetic toner (81) has a shape coefficient SF-1 of from 100 to 145 and SF-2 of from 100 to 125.

**58.** A method according to any of claims 1 to 18 or 45 to 57, an apparatus according to any of claims 19 to 31, 45 to 57, or a process cartridge according to any of claims 32 to 57, wherein said image bearer member (1) comprises an organic photoconductor having a charge injection layer.

**59.** A method, an apparatus, or a process cartridge according to claim 58, wherein said charge injection layer comprises a resin layer containing conductive fine particles dispersed therein.

**60.** A method, an apparatus, or a process cartridge according to claim 59, wherein said conductive fine particles are contained in said charge injection layer in an amount of from 20 parts by weight to 100 parts by weight based on 100 parts by weight of the resin.

**61.** A method, an apparatus, or a process cartridge according to claim 59 or claim 60, wherein said conductive fine particles contain at least one member selected from the group consisting of $SnO_2$, $TiO_2$ and ITO.

**62.** A method, an apparatus, or a process cartridge according to any of claims 59 to 61, wherein said resin layer is formed of at least one member selected from the group consisting of acrylic resin, polycarbonate, polyester, polyethylene terephthalate and polystyrene.

**63.** A method, an apparatus, or a process cartridge according to any of claims 59 to 62, wherein said charge injection layer has a volume resistivity of $1 \times 10^8$ $\Omega$ •cm or above.

**64.** A method according to any of claims 1 to 18 or 45 to 63; an apparatus according to any of claims 19 to 31 or 45 to 63; or a process cartridge according to any of claims 32 to 63, wherein said conductive magnetic particles (23) contain single-component crystals or mixed crystals of a conductive metal or metals.

**65.** A method according to any of claims 1 to 18 or 45 to 64; an apparatus according to any of claims 19 to 31 or 45 to 64; or a process cartridge according to any of claims 32 to 64, wherein said conductive magnetic particles (23) comprise a particulate conductive magnetic material dispersed in a binder polymer.

**66.** A method according to any of claims 1 to 18 or 45 to 65; an apparatus according to any of claims 19 to 31, or 45 to 65; or a process cartridge according to any of claims 32 to 65, wherein the surfaces of said conductive magnetic particles (23) are coated with a resin containing a conductive agent.

**67.** A method according to any of claims 1 to 18 or 45 to 66; an apparatus according to any of claims 19 to 31 or 45 to 66; or a process cartridge according to any of claims 32 to 66, wherein said conductive magnetic particles (23) have an average particle diameter of from 1 μm to 100 μm.

**68.** A method, an apparatus, or a process cartridge according to claim 67, wherein said conductive magnetic particles have an average particle diameter of from 5 μm to 50 μm.

**69.** A method according to any of claims 1 to 18 or 45 to 68; an apparatus according to any of claims 19 to 31, or 45 to 68; or a process cartridge according to any of claims 32 to 68, wherein said conductive magnetic particles (23) have a volume resistivity of $10^{10}$ $\Omega$ •cm or below.

**70.** A method an apparatus, or a process cartridge, according to claim 69, wherein said conductive magnetic particles (23) have a volume resistivity of $10^6$ $\Omega$ •cm to $10^9$ $\Omega$ •cm.

**71.** The method according to any of claims 1 to 18 or 45 to 70; an apparatus according to any of claims 19 to 31 or 45 to 70; or a process cartridge according to any of claims 32 to 70, wherein said conductive magnetic particles (23) have a saturation magnetization of 30 $Am^2$/kg or above.

72. A method, an apparatus, or a process cartridge, according to claim 71, wherein said conductive magnetic particles have a saturation magnetization of from 40 $Am^2$/kg to 300 $Am^2$/kg.

73. A method according to any of claims 1 to 18 or 45 to 72, an apparatus according to any of claims 19 to 31 or 45 to 72, or a process cartridge according to any of claims 32 to 72, wherein said magnetic brush has a magnetised core (21), an insulative sleeve (22) surrounding said core, and a magnetic strength at the periphery of said sleeve (22) of 400-1500 Gauss.

74. A method, an apparatus, or a process cartridge, according to claim 73 wherein said magnetic core (21) has two magnetic poles or more.

75. A method, an apparatus, or a process cartridge according to claim 73 or claim 74 wherein a gap between said insulative sleeve (22) and said image bearer member (1) is in a range of 0.3 - 1.0 mm.

76. A method according to claim 75 wherein a voltage potential difference of between 5 and 50 V is developed between the surface of said insulative sleeve (22) and said image bearer member (1).

77. An apparatus according to claim 75 including means for developing a voltage potential difference of between 5 and 50 V between the surfaces of said insulative sleeve (22) and said image bearer member (1).

78. A method according to any of claims 1 to 18 or 45 to 76 wherein an electrostatic field of strength 50-1600 V/cm is produced between said charging assembly (2) and said image bearer member (1).

79. An apparatus according to any of claims 19 to 31 or claims 45 to 75 or claim 77 including means for producing an electrostatic field of strength 50-1600 V/cm between said charging assembly (2) and said image bearer member (1).

80. A method, an apparatus, or a process cartridge, according to any of claims 74 to 79, wherein the position of said magnetic poles is set to produce a peak magnetic force within an angle of 20°, preferably within 10°, in a rotation direction of said image bearer member (1), measured from a reference line joining a centre of said magnetic brush charger (2) and a centre of rotation of said image bearing member (1).

81. The use of a developer material (t) in an electrophotographic image forming method in which an image bearer member (1) is electrostatically charged by a charging means (2) having a charging assembly having a magnetic brush formed from conductive magnetic particles (23) magnetically bound in contact with the image bearer member to charge its surface by direct charge injection;
    wherein the developer material comprises a magnetic toner (81) having a value of $\sigma \cdot D \cdot \delta$ of 150 or less, the value being obtained by multiplying i) a magnetization quantity $\sigma$ ($Am^2$/kg) in a magnetic field of 1 K oersted as measured by a vibration magnetometer, ii) a weight average particle diameter ($D_4$) D ($\mu$m) of the magnetic toner and iii) a density $\delta$ ($g/cm^3$) of the toner.

82. The use of developer according to claim 81 in an image forming method according to any of claims 2 to 18.

**Patentansprüche**

1. Bilderzeugungsverfahren, das folgendes aufweist:

    elektrostatisches Laden eines Bildträgerelements (1) durch eine Ladeeinrichtung (2);
    Ausbilden eines elektrostatisch latenten Bildes an dem somit geladenen Bildträgerelement durch eine Latentbilderzeugungseinrichtung (3);
    Entwickeln des elektrostatisch latenten Bildes mit einem magnetischen Toner (81), um ein Tonerbild auszubilden; und
    Übertragen des Tonerbildes auf ein Übertragungsmedium (P);
    wobei:
    die Ladeeinrichtung (2) eine Ladebaugruppe mit einer Magnetbürste aufweist, die aus leitenden magnetischen Partikeln (23) ausgebildet ist, die magnetisch an einer Laufbuchse (22) gebunden sind; die Magnetbürste der Ladebaugruppe in Kontakt mit dem Bildträgerelement steht und dazu in der Lage ist, die Oberfläche des Bildträgerelements durch direktes Injizieren von Ladung in die Oberfläche des Bildträgerelements elektrostatisch aufzuladen; der magnetische Toner (81) einen Kennwert σ*D*δ von 150 oder weniger hat, wobei der Kennwert durch ein Multiplizieren i) einer Magnetisierungsgröße σ (Am$^2$/kg) in einem magnetischen Feld der Feldstärke von 1 kOe, die durch einen Vibrationsmagnetometer gemessen wird, ii) eines Gewichtsdurchschnittspartikeldurchmessers (D4) D (μm) des magnetischen Toners und iii) seiner Dichte δ (g/cm$^3$) erhalten wird; und die Ladeeinrichtung (2) und der magnetische Toner (81) dergestalt sind, daß jeglicher magnetische Toner (81), der in die Magnetbürste der Ladeeinrichtung (2) eintritt, auf dem Bildträgerelement (1) abgeladen wird.

2.  Bilderzeugungsverfahren gemäß Anspruch 1,
    wobei das Bildträgerelement (1) durch ein Anlegen einer Gleichspannung an die Magnetbürstenladebaugruppe (2) aufgeladen wird.

3.  Bilderzeugungsverfahren gemäß Anspruch 1,
    wobei das Bildträgerelement (1) durch ein Anlegen einer Spannung, die durch ein Überlagern einer Wechselspannung auf eine Gleichspannung erzeugt wird, an die Magnetbürstenladebaugruppe (2) aufgeladen wird.

4.  Bilderzeugungsverfahren gemäß einem der Ansprüche 1 bis 3,
    wobei das Übertragungsmedium (P), auf das Tonerbild übertragen wird, ein endgültiges Übertragungsmedium ist.

5.  Bilderzeugungsverfahren gemäß einem der Ansprüche 1 bis 3,
    wobei das Übertragungsmedium (P), auf das Tonerbild übertragen wird, ein Zwischenübertragungsmedium ist.

6.  Bilderzeugungsverfahren gemäß Anspruch 5,
    wobei das Tonerbild, das zu dem Zwischenübertragungsmedium übertragen wird, nochmals zu einem endgültigen Übertragungsmedium übertragen wird.

7.  Bilderzeugungsverfahren gemäß einem der vorherigen Ansprüche 1 bis 6,
    wobei magnetischer Toner (81), der nach einer Übertragung des Bildes auf dem Bildträgerelement (1) zurückgehalten wird, in die Magnetbürstenladebaugruppe (2) eintritt und anschließend von der Magnetbürstenladebaugruppe (2) abgeladen wird.

8.  Bilderzeugungsverfahren gemäß Anspruch 7,
    wobei magnetischer Toner, der von der Magnetbürstenladebaugruppe abgeladen ist, gleichzeitig während eines Entwickelns durch eine Entwicklungseinrichtung (8) entfernt wird, die das elektrostatische latente Bild an dem Bildträgerelement mit dem magnetischen Toner entwickelt.

9.  Bilderzeugungsverfahren gemäß einem der vorherigen Ansprüche,
    wobei zumindest ein Teil des Toners, der nach der Übertragung an dem Bildträgerelement zurückgehalten wird, durch eine Reinigungseinrichtung (6) entfernt wird, die zwischen einer Bildübertragungszone (5) und einer Ladezone (2) vorgesehen ist, und durch die Reinigungseinrichtung (6) nicht entfernter magnetischer Toner in die Magnetbürstenladebaugruppe (2) eintritt und anschließend von der Magnetbürstenladebaugruppe (2) abgeladen wird.

10. Bilderzeugungsverfahren gemäß einem der vorherigen Ansprüche,
    wobei die Magnetbürstenladebaugruppe (2) eine nichtmagnetische Laufbuchse (22), eine magnetische Walze (21), die im Inneren der nichtmagnetischen Laufbuchse vorgesehen ist, und leitende magnetische Partikel (23) aufweist, die magnetisch an einer Oberfläche der nichtmagnetischen Laufbuchse gebunden sind.

11. Bilderzeugungsverfahren gemäß Anspruch 10,
    wobei die Magnetbürstenladebaugruppe eine magnetische Flußdichte von 400 bis 1500 Gauss an der Oberfläche der nichtmagnetischen Laufbuchse (22) hat.

12. Bilderzeugungsverfahren gemäß Anspruch 10,

wobei die Magnetbürstenladebaugruppe eine magnetische Flußdichte von 600 bis 1300 Gauss an der Oberfläche der nichtmagnetischen Laufbuchse (22) hat.

13. Bilderzeugungsverfahren gemäß Anspruch 10,
    wobei die magnetische Walze (21) zwei oder mehrere Magnetpole hat.

14. Bilderzeugungsverfahren gemäß Anspruch 10,
    wobei das Bildträgerelement eine lichtempfindliche Trommel aufweist und Magnetpole der magnetischen Walze (21) in der Magnetbürstenladebaugruppe so festgelegt sind, daß ein Spitzenwert einer Magnetkraft innerhalb eines Winkels von 20° in einer Drehrichtung der lichtempfindlichen Trommel vorhanden sein kann, der von einer Linie aus gemessen wird, die Mittelpunkte der lichtempfindlichen Trommel und der Magnetbürstenladebaugruppe verbindet.

15. Bilderzeugungsverfahren gemäß Anspruch 10,
    wobei das Bildträgerelement eine lichtempfindliche Trommel (1) aufweist und Magnetpole der magnetischen Walze (21) in der Magnetbürstenladebaugruppe so festgelegt sind, daß ein Spitzenwert einer Magnetkraft innerhalb eines Winkels von 10° in einer Drehrichtung der lichtempfindlichen Trommel vorhanden sein kann, der von einer Linie aus gemessen wird, die Mittelpunkte der lichtempfindlichen Trommel und der Magnetbürstenladebaugruppe verbindet.

16. Bilderzeugungsverfahren gemäß Anspruch 10,
    wobei das Bildträgerelement eine lichtempfindliche Trommel aufweist und die Magnetbürstenladebaugruppe sich in dieselbe Richtung wie die lichtempfindliche Trommel dreht.

17. Bilderzeugungsverfahren gemäß Anspruch 16,
    wobei eine Drehung der Magnetbürstenladebaugruppe durch ein Fixieren der magnetischen Walze (21) und ein Drehen der nichtmagnetischen Laufbuchse (22) erreicht wird.

18. Bilderzeugungsverfahren gemäß Anspruch 16,
    wobei die lichtempfindliche Trommel (1) und die Magnetbürstenladebaugruppe (2) sich mit derselben Umfangsgeschwindigkeit drehen.

19. Bilderzeugungsgerät, das folgendes aufweist:

    ein Bildträgerelement (1) zum Tragen eines elektrostatisch latenten Bildes;
    eine Ladeeinrichtung (2) zum elektrostatischen Laden des Bildträgerelements;
    eine Latentbilderzeugungseinrichtung (3) zum Ausbilden eines elektrostatisch latenten Bildes an dem geladenen Bildträgerelement (1);
    eine Entwicklungseinrichtung (8), die einen magnetischen Toner (81) hält für ein sichtbares Wiedergeben des elektrostatisch latenten Bildes durch einen Entwicklungsvorgang, um ein Tonerbild auszubilden; und
    eine Übertragungseinrichtung (5) zum Übertragen des Tonerbildes auf ein Übertragungsmedium;
    wobei:
    die Ladeeinrichtung (2) eine Ladebaugruppe mit einer Magnetbürste aufweist, die aus leitenden magnetischen Partikeln (23) ausgebildet ist, die magnetisch an einer Laufbuchse (22) gebunden sind; die Magnetbürste der Ladebaugruppe in Kontakt mit dem Bildträgerelement steht und dazu in der Lage ist, die Oberfläche des Bildträgerelements durch direktes Injizieren von Ladung in die Oberfläche des Bildträgerelements elektrostatisch aufzuladen; und der magnetische Toner (81) einen Kennwert $\sigma*D*\delta$ von 150 oder weniger hat, wobei der Kennwert durch ein Multiplizieren i) einer Magnetisierungsgröße $\sigma$ ($Am^2$/kg) in einem magnetischen Feld der Feldstärke von 1 kOe, die durch einen Vibrationsmagnetometer gemessen wird, ii) eines Gewichtsdurchschnittspartikeldurchmessers (D4) D ($\mu$m) des magnetischen Toners und iii) seiner Dichte $\delta$ (g/$cm^3$) erhalten wird.

20. Bilderzeugungsgerät gemäß Anspruch 19,
    wobei die Magnetbürstenladeeinrichtung (2) geeignet ist, Tonerpartikel (81) abzuladen, die nach einer Bildübertragung an dem Bildträgerelement (1) verbleiben und in die Ladebaugruppe (2) eintreten.

21. Bilderzeugungsgerät gemäß Anspruch 20,
    wobei die Entwicklungseinrichtung (8) geeignet ist, jegliche Tonerpartikel (81) von dem Bildträgerelement (1) zu entfernen, die von der Magnetbürstenladebaugruppe (2) abgeladen sind.

22. Bilderzeugungsgerät gemäß Anspruch 20 oder Anspruch 21,
das eine Reinigungseinrichtung (6) zum Entfernen magnetischen Toners hat, der an dem Bildträgerelement (1) nach einer Bildübertragung zurückgehalten wird, wobei sich die Reinigungseinrichtung (6) zwischen der Bildübertragungseinrichtung (5) und der Ladeeinrichtung (2) befindet.

23. Bilderzeugungsgerät gemäß einem der vorherigen Ansprüche 19 bis 22,
wobei die Magnetbürstenladebaugruppe (2) eine nichtmagnetische Laufbuchse (22), eine magnetische Walze (21), die im Inneren der nichtmagnetischen Laufbuchse vorgesehen ist, und leitende magnetische Partikel (23) aufweist, die magnetisch an einer Oberfläche der nichtmagnetischen Laufbuchse gebunden sind.

24. Bilderzeugungsgerät gemäß Anspruch 23,
wobei die Magnetbürstenladebaugruppe (2) eine magnetische Flußdichte von 400 bis 1500 Gauss an der Oberfläche der nichtmagnetischen Laufbuchse (22) hat.

25. Bilderzeugungsgerät gemäß Anspruch 23,
wobei die Magnetbürstenladebaugruppe (2) eine magnetische Flußdichte von 600 bis 1300 Gauss an der Oberfläche der nichtmagnetischen Laufbuchse (22) hat.

26. Bilderzeugungsgerät gemäß Anspruch 23,
wobei die magnetische Walze (21) zwei oder mehrere Magnetpole hat.

27. Bilderzeugungsgerät gemäß Anspruch 23,
wobei das Bildträgerelement (1) eine lichtempfindliche Trommel aufweist und Magnetpole der magnetischen Walze (21) in der Magnetbürstenladebaugruppe (2) so festgelegt sind, daß ein Spitzenwert einer Magnetkraft innerhalb eines Winkels von 20° in einer Drehrichtung der lichtempfindlichen Trommel vorhanden sein kann, der von einer Linie aus gemessen wird, die Mittelpunkte der lichtempfindlichen Trommel (1) und der Magnetbürstenladebaugruppe (2) verbindet.

28. Bilderzeugungsgerät gemäß Anspruch 23,
wobei das Bildträgerelement (1) eine lichtempfindliche Trommel aufweist und Magnetpole der magnetischen Walze (21) in der Magnetbürstenladebaugruppe (2) so festgelegt sind, daß ein Spitzenwert einer Magnetkraft innerhalb eines Winkels von 10° in einer Drehrichtung der lichtempfindlichen Trommel vorhanden sein kann, die von einer Linie aus gemessen wird, die Mittelpunkte der lichtempfindlichen Trommel (1) und der Magnetbürstenladebaugruppe (2) verbindet.

29. Bilderzeugungsgerät gemäß Anspruch 23,
wobei das Bildträgerelement eine lichtempfindliche Trommel (1) aufweist und die Magnetbürstenladebaugruppe (2) sich in dieselbe Richtung wie die lichtempfindliche Trommel dreht.

30. Bilderzeugungsgerät gemäß Anspruch 29,
wobei eine Drehung der Magnetbürstenladebaugruppe (2) durch ein Fixieren der magnetischen Walze (21) und ein Drehen der nichtmagnetischen Laufbuchse (22) erreicht wird.

31. Bilderzeugungsgerät gemäß Anspruch 29,
wobei die lichtempfindliche Trommel (1) und die Magnetbürstenladebaugruppe (2) sich mit derselben Umfangsgeschwindigkeit drehen.

32. Prozeßkartusche, die abnehmbar an einer Hauptbaugruppe eines Bilderzeugungsgeräts anbringbar ist und die folgendes aufweist:

ein Bildträgerelement (1) zum Tragen eines elektrostatisch latenten Bildes;
eine Ladeeinrichtung (2) zum elektrostatischen Laden des Bildträgerelements; und
eine Entwicklungseinrichtung (8), die magnetischen Toner (81) hält für ein sichtbares Wiedergeben des an dem Bildträgerelement gehaltenen elektrostatisch latenten Bildes durch einen Entwicklungsvorgang, um ein Tonerbild auszubilden;
wobei:

die Ladeeinrichtung (2) eine Ladebaugruppe mit einer Magnetbürste aufweist, die aus leitenden magnetischen Partikeln (23) ausgebildet ist, die magnetisch an einer Laufbuchse (22) gebunden sind; die Magnetbürste der Ladebaugruppe in Kontakt mit dem Bildträgerelement (1) steht und dazu in der Lage ist, die Oberfläche des Bildträgerelements durch direktes Injizieren von Ladung in die Oberfläche des Bildträgerelements elektrostatisch aufzuladen; und

der magnetische Toner einen Kennwert σ*D*δ von 150 oder weniger hat, wobei der Kennwert durch ein Multiplizieren i) einer Magnetisierungsgröße σ ($Am^2/kg$) in einem magnetischen Feld der Feldstärke von 1 kOe, die durch einen Vibrationsmagnetometer gemessen wird, ii) eines Gewichtsdurchschnittspartikeldurchmessers (D4) D (μm) des magnetischen Toners und iii) seiner Dichte δ ($g/cm^3$) erhalten wird.

33. Prozeßkartusche gemäß Anspruch 32,
wobei die Magnetbürstenladebaugruppe (2) geeignet ist, Tonerpartikel (81) abzuladen, die nach einer Bildübertragung an dem Bildträgerelement (1) verbleiben und in die Ladebaugruppe (2) eintreten.

34. Prozeßkartusche gemäß Anspruch 33,
wobei die Entwicklungseinrichtung (8) geeignet ist, jegliche Tonerpartikel (81) von dem Bildträgerelement (1) zu entfernen, die von der Magnetbürstenladebaugruppe (2) abgeladen sind.

35. Prozeßkartusche gemäß Anspruch 32 oder Anspruch 33,
die eine der Ladeeinrichtung (2) vorhergehende Reinigungseinrichtung (6) für ein Entfernen magnetischen Toners (81) hat, der an dem Bildträgerelement (1) nach einer Bildübertragung zurückgehalten wird.

36. Prozeßkartusche gemäß einem der vorherigen Ansprüche 32 bis 35,
wobei die Magnetbürstenladebaugruppe (2) eine nichtmagnetische Laufbuchse (22), eine magnetische Walze (21), die im Inneren der nichtmagnetischen Laufbuchse vorgesehen ist, und leitende magnetische Partikel (23) aufweist, die magnetisch an einer Oberfläche der nichtmagnetischen Laufbuchse gebunden sind.

37. Prozeßkartusche gemäß Anspruch 36,
wobei die Magnetbürstenladebaugruppe (2) eine magnetische Flußdichte von 400 bis 1500 Gauss an der Oberfläche der nichtmagnetischen Laufbuchse hat.

38. Prozeßkartusche gemäß Anspruch 36,
wobei die Magnetbürstenladebaugruppe (2) eine magnetische Flußdichte von 600 bis 1300 Gauss an der Oberfläche der nichtmagnetischen Laufbuchse (22) hat.

39. Prozeßkartusche gemäß Anspruch 36,
wobei die magnetische Walze (21) zwei oder mehrere Magnetpole hat.

40. Prozeßkartusche gemäß Anspruch 36,
wobei das Bildträgerelement eine lichtempfindliche Trommel (1) aufweist und Magnetpole der magnetischen Walze (21) in der Magnetbürstenladebaugruppe (2) so festgelegt sind, daß ein Spitzenwert einer Magnetkraft innerhalb eines Winkels von 20° in einer Drehrichtung der lichtempfindlichen Trommel vorhanden ist, der von einer Linie aus gemessen ist, die Mittelpunkte der lichtempfindlichen Trommel (1) und der Magnetbürstenladebaugruppe (2) verbindet.

41. Prozeßkartusche gemäß Anspruch 36,
wobei das Bildträgerelement eine lichtempfindliche Trommel (1) aufweist und Magnetpole der magnetischen Walze (21) in der Magnetbürstenladebaugruppe (2) so festgelegt sind, daß ein Spitzenwert einer Magnetkraft innerhalb eines Winkels von 10° in einer Drehrichtung der lichtempfindlichen Trommel vorhanden sein kann, der von einer Linie aus gemessen wird, die Mittelpunkte der lichtempfindlichen Trommel (1) und der Magnetbürstenladebaugruppe (2) verbindet.

42. Prozeßkartusche gemäß Anspruch 36,
wobei das Bildträgerelement (1) eine lichtempfindliche Trommel aufweist und die Magnetbürstenladebaugruppe (2) sich in dieselbe Richtung wie die lichtempfindliche Trommel dreht.

43. Prozeßkartusche gemäß Anspruch 42,
wobei eine Drehung der Magnetbürstenladebaugruppe (2) durch ein Fixieren der magnetischen Walze (21) und ein Drehen der nichtmagnetischen Laufbuchse (22) erreicht wird.

44. Prozeßkartusche gemäß Anspruch 42,
wobei die lichtempfindliche Trommel (1) und die Magnetbürstenladebaugruppe (2) sich mit derselben Umfangsgeschwindigkeit drehen.

45. Verfahren gemäß einem der Ansprüche 1 bis 18, Gerät gemäß einem der Ansprüche 19 bis 31 oder Prozeßkartusche gemäß einem der Ansprüche 32 bis 44,
wobei der magnetische Toner (81) einen Kennwert $\sigma*D*\delta$ hat, der innerhalb eines Bereiches von 50 bis 150 liegt.

46. Verfahren, Gerät oder Prozeßkartusche gemäß Anspruch 45, wobei der magnetische Toner (81) einen Kennwert $\sigma*D*\delta$ hat, der innerhalb eines Bereiches von 100 bis 130 liegt.

47. Verfahren gemäß einem der Ansprüche 1 bis 18, 45, 46; Gerät gemäß einem der Ansprüche 19 bis 31 oder 45 bis 46; oder Prozeßkartusche gemäß einem der Ansprüche 32 bis 46,
wobei der magnetische Toner (81) eine Magnetisierungsgröße $\sigma$ von 10 Am$^2$/kg bis 30 Am$^2$/kg hat.

48. Verfahren, Gerät oder Prozeßkartusche gemäß Anspruch 47,
wobei der magnetische Toner (81) eine Magnetisierungsgröße $\sigma$ von 10 Am$^2$/kg bis 20 Am$^2$/kg hat.

49. Verfahren gemäß einem der Ansprüche 1 bis 18 oder 45 bis 48, Gerät gemäß einem der Ansprüche 19 bis 31 oder 45 bis 48 oder Prozeßkartusche gemäß einem der Ansprüche 32 bis 48,
wobei der magnetische Toner (81) einen Gewichtsdurchschnittspartikeldurchmesser D von 2 μm bis 20 μm hat.

50. Verfahren, Gerät oder Prozeßkartusche gemäß Anspruch 49,
wobei der magnetische Toner (81) einen Gewichtsdurchschnittspartikeldurchmesser D von 4 μm bis 8 μm hat.

51. Verfahren gemäß einem der Ansprüche 1 bis 8, 18 oder 45 bis 50, Gerät gemäß einem der Ansprüche 19 bis 31 oder 45 bis 50, oder Prozeßkartusche gemäß einem der Ansprüche 32 bis 50,
wobei der magnetische Toner (81) eine Dichte $\delta$ von 1,1 bis 2,0 hat.

52. Verfahren, Gerät oder Prozeßkartusche gemäß Anspruch 51,
wobei der magnetische Toner (81) eine Dichte $\delta$ von 1,1 bis 1,6 hat.

53. Verfahren gemäß einem der Ansprüche 1 bis 18 oder 45 bis 52, Gerät gemäß einem der Ansprüche 19 bis 31 oder 45 bis 52, oder Prozeßkartusche gemäß einem der Ansprüche 32 bis 52,
wobei der magnetische Toner (81) einen spezifischen Widerstand von 10$^9$ Ω·cm oder mehr hat.

54. Verfahren, Gerät oder Prozeßkartusche gemäß Anspruch 53,
wobei der magnetische Toner (81) einen spezifischen Widerstand von 10$^{10}$ Ω·cm oder mehr hat.

55. Verfahren gemäß einem der Ansprüche 1 bis 18 oder 45 bis 54, Gerät gemäß einem der Ansprüche 19 bis 31 oder 45 bis 54, oder Prozeßkartusche gemäß einem der Ansprüche 32 bis 54,
wobei der magnetische Toner (81) ein sphärischer magnetischer Toner ist.

56. Verfahren, Gerät oder Prozeßkartusche gemäß Anspruch 55,
wobei der sphärische magnetische Toner (81) einen Formfaktor SF-1 von 100 bis 150 und SF-2 von 100 bis 130 hat.

57. Verfahren, Gerät oder Prozeßkartusche gemäß Anspruch 55,
wobei der sphärische magnetische Toner (81) einen Formfaktor SF-1 von 100 bis 145 und SF-2 von 100 bis 125 hat.

58. Verfahren gemäß einem der Ansprüche 1 bis 18 oder 45 bis 57, Gerät gemäß einem der Ansprüche 19 bis 31 oder 45 bis 57, oder Prozeßkartusche gemäß einem der Ansprüche 32 bis 57,
wobei das Bildträgerelement (1) einen organischen Photoleiter mit einer Ladungsinjektionsschicht aufweist.

**59.** Verfahren, Gerät oder Prozeßkartusche gemäß Anspruch 58,
wobei die Ladungsinjektionsschicht eine Harzschicht aufweist, in der feine leitende Partikel dispergiert sind.

**60.** Verfahren, Gerät oder Prozeßkartusche gemäß Anspruch 59,
wobei die feinen leitenden Partikel in der Ladungsinjektionsschicht in einer Menge von 20 Gewichtsteile bis 100 Gewichtsteile bezogen auf 100 Gewichtsteile des Harzes enthalten sind.

**61.** Verfahren, Gerät oder Prozeßkartusche gemäß Anspruch 59 oder Anspruch 60,
wobei die feinen leitenden Partikel zumindest $SnO_2$, $TiO_2$ oder ITO enthalten.

**62.** Verfahren, Gerät oder Prozeßkartusche gemäß einem der Ansprüche 59 bis 61,
wobei die Harzschicht zumindest aus Acrylharz, Polycarbonat, Polyester, Polyethylen-Therephthalat oder Polystyrol ausgebildet ist.

**63.** Verfahren, Gerät oder Prozeßkartusche gemäß einem der Ansprüche 59 bis 62,
wobei die Ladungsinjektionsschicht einen spezifischen Widerstand von 1 x $10^8$ Ω·cm oder mehr hat.

**64.** Verfahren gemäß einem der Ansprüche 1 bis 18 oder 45 bis 63; Gerät gemäß einem der Ansprüche 19 bis 31 oder 45 bis 63; oder Prozeßkartusche gemäß einem der Ansprüche 32 bis 63,
wobei die leitenden magnetischen Partikel (23) Einkomponenten-Kristalle oder gemischte Kristalle eines leitenden Metalls oder Metalls enthalten.

**65.** Verfahren gemäß einem der Ansprüche 1 bis 18 oder 45 bis 64; Gerät gemäß einem der Ansprüche 19 bis 31 oder 45 bis 64; oder Prozeßkartusche gemäß einem der Ansprüche 32 bis 64,
wobei die leitenden magnetischen Partikel (23) ein aus Partikeln bestehendes, leitendes magnetisches Material aufweisen, das in einem Binderpolymer dispergiert ist.

**66.** Verfahren gemäß einem der Ansprüche 1 bis 18 oder 45 bis 65; Gerät gemäß einem der Ansprüche 19 bis 31 oder 45 bis 65; oder Prozeßkartusche gemäß einem der Ansprüche 32 bis 65,
wobei die Oberflächen der leitenden magnetischen Partikel (23) mit einem Harz überzogen sind, das ein leitendes Mittel enthält.

**67.** Verfahren gemäß einem der Ansprüche 1 bis 18 oder 45 bis 66; Gerät gemäß einem der Ansprüche 19 bis 31 oder 45 bis 66 oder Prozeßkartusche gemäß einem der Ansprüche 32 bis 66;
wobei die leitenden magnetischen Partikel (23) einen Durchschnittspartikeldurchmesser von 1 µm bis 100 µm haben.

**68.** Verfahren, Gerät oder Prozeßkartusche gemäß Anspruch 67,
wobei die leitenden magnetischen Partikel einen Durchschnittspartikeldurchmesser von 5 µm bis 50 µm haben.

**69.** Verfahren gemäß einem der Ansprüche 1 bis 18 oder 45 bis 68; Gerät gemäß einem der Ansprüche 19 bis 31 oder 45 bis 68; oder Prozeßkartusche gemäß einem der Ansprüche 32 bis 68,
wobei die leitenden magnetischen Partikel (23) einen spezifischen Widerstand von $10^{10}$ Ω·cm oder weniger haben.

**70.** Verfahren, Gerät oder Prozeßkartusche gemäß Anspruch 69,
wobei die leitenden magnetischen Partikel (23) einen spezifischen Widerstand von $10^6$ Ω·cm bis $10^9$ Ω·cm haben.

**71.** Verfahren gemäß einem der Ansprüche 1 bis 18 oder 45 bis 70; Gerät gemäß einem der Ansprüche 19 bis 31 oder 45 bis 70; oder Prozeßkartusche gemäß einem der Ansprüche 32 bis 70,
wobei die leitenden magnetischen Partikel (23) eine Sättigungsmagnetisierung von 30 $Am^2$/kg oder mehr haben.

**72.** Verfahren, Gerät oder Prozeßkartusche gemäß Anspruch 71,
wobei die leitenden magnetischen Partikel eine Sättigungsmagnetisierung von 40 $Am^2$/kg bis 300 $Am^2$/kg haben.

**73.** Verfahren gemäß einem der Ansprüche 1 bis 18 oder 45 bis 72; Gerät gemäß einem der Ansprüche 19 bis 31 oder 45 bis 72; oder Prozeßkartusche gemäß einem der Ansprüche 32 bis 72,

wobei die Magnetbürste einen magnetisierten Kern (21), eine isolierende Laufbuchse (22), die den Kern umschließt, und eine magnetische Flußdichte an dem Umfang der Laufbuchse (22) von 400 bis 1500 Gauss hat.

**74.** Verfahren, Gerät oder Prozeßkartusche gemäß Anspruch 73,

wobei der magnetische Kern (21) zwei oder mehr Magnetpole hat.

**75.** Verfahren, Gerät oder Prozeßkartusche gemäß Anspruch 73 oder Anspruch 74,

wobei ein Zwischenraum zwischen der isolierenden Laufbuchse (22) und dem Bildträgerelement (1) in einem Bereich von 0,3 bis 1,0 mm ist.

**76.** Verfahren gemäß Anspruch 75,

wobei eine Spannungspotentialdifferenz zwischen 5 und 50 V zwischen der Oberfläche der isolierenden Laufbuchse (22) und dem Bildträgerelement (1) ausgebildet wird.

**77.** Gerät gemäß Anspruch 75,

das Einrichtungen zum Ausbilden einer Spannungspotentialdifferenz zwischen 5 und 50 V zwischen den Oberflächen der isolierenden Laufbuchse (22) und des Bildträgerelements (1) aufweist.

**78.** Verfahren gemäß einem der Ansprüche 1 bis 18 oder 45 bis 76,

wobei ein elektrostatisches Feld der Feldstärke 50 bis 1600 V/cm zwischen der Ladebaugruppe (2) und dem Bildträgerelement (1) erzeugt wird.

**79.** Gerät gemäß einem der Ansprüche 19 bis 31 oder einem der Ansprüche 45 bis 75 oder Anspruch 77,

das Einrichtungen zum Erzeugen eines elektrostatischen Felds der Feldstärke 50 bis 1600 V/cm zwischen der Ladebaugruppe (2) und dem Bildträgerelement (1) aufweist.

**80.** Verfahren, Gerät oder Prozeßkartusche gemäß einem der Ansprüche 74 bis 79,

wobei die Position der Magnetpole so festgelegt ist, daß ein Spitzenwert einer Magnetkraft innerhalb eines Winkels von 20° oder vorzugsweise innerhalb von 10° in einer Drehrichtung des Bildträgerelements (1) erzeugt wird, der von einer Referenzlinie aus gemessen wird, die einen Mittelpunkt des Magnetbürstenladers (2) und einen Drehmittelpunkt des Bildträgerelements (1) verbindet.

**81.** Verwendung eines Entwicklungsmaterials (t) bei einem elektrophotographischen Bilderzeugungsverfahren, bei dem ein Bildträgerelement (1) durch eine Ladeeinrichtung (2) elektrostatisch geladen wird, die eine Ladebaugruppe mit einer Magnetbürste hat, die aus leitenden magnetischen Partikeln (23) ausgebildet ist, die magnetisch gebunden sind in einen Kontakt mit dem Bildträgerelement, um seine Oberfläche durch direkte Ladungsinjektion zu laden; wobei das Entwicklungsmaterial einen magnetischen Toner (81) mit einem Kennwert $\sigma * D * \delta$ von 150 oder weniger aufweist, wobei der Kennwert durch ein Multiplizieren i) einer Magnetisierungsgröße a ($Am^2/kg$) in einem magnetischen Feld der Feldstärke von 1 kOe, die durch einen Vibrationsmagnetometer gemessen wird, ii) eines Gewichtsdurchschnittspartikeldurchmessers (D4) D ($\mu m$) des magnetischen Toners und iii) einer Dichte $\delta$ ($g/cm^3$) des Toners erhalten wird.

**82.** Verwendung eines Entwicklers gemäß Anspruch 81 bei einem Bilderzeugungsverfahren gemäß einem der Ansprüche 2 bis 18.

**Revendications**

**1.** Procédé de formation d'images comprenant :

la charge électrostatique d'un élément porteur d'image (1) à l'aide d'un moyen de charge (2) ;
la formation d'une image latente électrostatique sur l'élément porteur d'image ainsi chargé, par un moyen (3) de formation d'une image latente ;
le développement de l'image latente électrostatique avec un toner magnétique (81) pour former une image en toner ; et
le report de l'image en toner sur un support de report (P) ;

dans lequel :

ledit moyen de charge (2) comporte un ensemble de charge ayant une brosse magnétique formée de particules magnétiques conductrices (23) liées magnétiquement sur un manchon (22) ; ladite brosse magnétique dudit ensemble de charge étant en contact avec l'élément porteur d'image et étant capable de charger électrostatiquement la surface de l'élément porteur d'image en injectant directement des charges dans la surface de l'élément porteur d'image ;

ledit toner magnétique (81) ayant une valeur $\sigma \cdot D \cdot \delta$ de 150 ou moins, la valeur étant obtenue en multipliant i) une quantité d'aimantation a ($Am^2/kg$) dans un champ magnétique de 1 k oersted tel que mesuré par un magnétomètre à vibration, ii) le diamètre moyen en poids des particules (D4) D ($\mu$m) du toner magnétique et iii) sa masse volumique $\delta$ ($g/cm^3$) ; et

le moyen de charge (2) et le toner magnétique (81) étant tels que tout toner magnétique (81) entrant dans la brosse magnétique du moyen de charge (2) est évacué sur l'élément porteur d'image (1).

2. Procédé de formation d'images selon la revendication 1, dans lequel ledit élément porteur d'image (1) est chargé par l'application d'une tension continue audit ensemble de charge (2) à brosse magnétique.

3. Procédé de formation d'images selon la revendication 1, dans lequel ledit élément porteur d'image (1) est chargé par l'application d'une tension produite en superposant une tension alternative à une tension continue audit ensemble (2) de charge à brosse magnétique.

4. Procédé de formation d'images selon l'une quelconque des revendications 1 à 3, dans lequel ledit support de report (P) auquel l'image en toner est reportée est un support de report final.

5. Procédé de formation d'images selon l'une quelconque des revendications 1 à 3, dans lequel ledit support de report (P) auquel l'image en toner est reportée est un support de report intermédiaire.

6. Procédé de formation d'images selon la revendication 5, dans lequel l'image en toner reportée sur ledit support de report intermédiaire est de nouveau reportée sur un support de report final.

7. Procédé de formation d'images selon l'une quelconque des revendications précédentes 1 à 6, dans lequel du toner magnétique (81) retenu sur ledit élément porteur d'image (1) après le report de l'image entre dans ledit ensemble de charge (2) à brosse magnétique et est ensuite évacué de l'ensemble (2) de charge à brosse magnétique.

8. Procédé de formation d'images selon la revendication 7, dans lequel du toner magnétique évacué de l'ensemble de charge à brosse magnétique est enlevé simultanément pendant le développement par un moyen de développement (8) qui développe avec le toner magnétique l'image latente électrostatique se trouvant sur l'élément porteur d'image.

9. Procédé de formation d'images selon l'une quelconque des revendications précédentes, dans lequel au moins une partie du toner retenu sur ledit élément porteur d'image après le report est enlevée par un moyen de nettoyage (6) prévu entre une zone (5) de report d'image et une zone (2) de charge et le toner magnétique non enlevé par le moyen de nettoyage (6) entre dans ledit ensemble de charge (2) à brosse magnétique et est ensuite évacué de l'ensemble de charge (2) à brosse magnétique.

10. Procédé de formation d'images selon l'une quelconque des revendications précédentes, dans lequel l'ensemble de charge (2) à brosse magnétique comporte un manchon non magnétique (22), un rouleau magnétique (21) prévu à l'intérieur du manchon non magnétique et des particules magnétiques conductrices (23) liées magnétiquement à une surface du manchon non magnétique.

11. Procédé de formation d'images selon la revendication 10, dans lequel l'ensemble de charge à brosse magnétique possède une intensité de champ magnétique de 400 à 1500 gauss sur la surface du manchon non magnétique (22).

12. Procédé de formation d'images selon la revendication 10, dans lequel l'ensemble de charge à brosse magnétique possède une intensité de champ magnétique de 600 à 1300 gauss sur la surface du manchon non magnétique (22).

13. Procédé de formation d'images selon la revendication 10, dans lequel le rouleau magnétique (21) possède deux ou plus de deux pôles magnétiques.

**14.** Procédé de formation d'images selon la revendication 10, dans lequel l'élément porteur d'image comporte un tambour photosensible, et des pôles magnétiques du rouleau magnétique (21) sont positionnés dans l'ensemble de charge à brosse magnétique de manière qu'un pic d'une force magnétique puisse être présent dans un angle de 20°, dans un sens de rotation du tambour photosensible, mesuré par rapport à une ligne reliant les centres du tambour photosensible et de l'ensemble de charge à brosse magnétique.

**15.** Procédé de formation d'images selon la revendication 10, dans lequel l'élément porteur d'image comporte un tambour photosensible (1), et des pôles magnétiques du rouleau magnétique (21) sont positionnés dans l'ensemble de charge à brosse magnétique de manière qu'un pic d'une force magnétique puisse être présent dans un angle de 10°, dans un sens de rotation du tambour photosensible, mesuré par rapport à une ligne reliant les centres du tambour photosensible et de l'ensemble de charge à brosse magnétique.

**16.** Procédé de formation d'images selon la revendication 10, dans lequel l'élément porteur d'image comporte un tambour photosensible, et l'ensemble de charge à brosse magnétique tourne dans le même sens que le tambour photosensible.

**17.** Procédé de formation d'images selon la revendication 16, dans lequel la rotation de l'ensemble de charge à brosse magnétique est réalisée en fixant le rouleau magnétique (21) et en faisant tourner le manchon non magnétique (22).

**18.** Procédé de formation d'images selon la revendication 16, dans lequel le tambour photosensible (1) et l'ensemble de charge (2) à brosse magnétique tournent à la même vitesse périphérique.

**19.** Appareil de formation d'images comportant :

un élément porteur d'image (1) destiné à porter une image latente électrostatique ;
un moyen de charge (2) destiné à charger électrostatiquement l'élément porteur d'image ;
un moyen (3) de formation d'une image latente destiné à former une image latente électrostatique sur l'élément porteur d'image chargé (1) ;
un moyen de développement (8) contenant un toner magnétique (81) et destiné à rendre visible par développement l'image latente électrostatique pour former une image en toner ; et
un moyen de report (5) destiné à reporter l'image en toner sur un support de report ;

dans lequel :

ledit moyen de charge (2) comporte un ensemble de charge ayant une brosse magnétique formée de particules magnétiques conductrices (23) liées magnétiquement sur un manchon (22) ; ladite brosse magnétique dudit ensemble de charge étant en contact avec l'élément porteur d'image et étant capable de charger électrostatiquement la surface de l'élément porteur d'image en injectant directement des charges dans la surface de l'élément porteur d'image ; et
ledit toner magnétique (1) présente une valeur de $\sigma \cdot D \cdot \delta$ de 150 ou moins, ladite valeur étant obtenue en multipliant i) une quantité d'aimantation $\sigma$ (Am$^2$/kg) dans un champ magnétique de 1 k oersted tel que mesuré par un magnétomètre à vibration, ii) un diamètre moyen en poids des particules (D$_4$) D ($\mu$m) du toner magnétique et iii) sa masse volumique $\delta$ (g/cm$^3$).

**20.** Appareil de formation d'images selon la revendication 19, dans lequel l'ensemble de charge (2) à brosse magnétique est conçu pour évacuer des particules de toner (81) restant sur l'élément porteur d'image (1) après un report d'image et entrant dans l'ensemble de charge (2).

**21.** Appareil de formation d'images selon la revendication 20, dans lequel le moyen de développement (8) est conçu pour enlever de l'élément porteur d'image (1) toutes particules de toner (81) évacuées de l'ensemble de charge (2) à brosse magnétique.

**22.** Appareil de formation d'images selon la revendication 20 ou la revendication 21, comportant un moyen de nettoyage (6) destiné à enlever du toner magnétique retenu sur ledit élément porteur d'image (1) après un report d'image, le moyen de nettoyage (6) étant placé entre ledit moyen (5) de report d'image et ledit moyen de charge (2).

**23.** Appareil de formation d'images selon l'une quelconque des revendications précédentes 19 à 22, dans lequel l'ensemble de charge (2) à brosse magnétique comporte un manchon non magnétique (22), un rouleau magnétique (21) prévu à l'intérieur du manchon non magnétique et des particules magnétiques conductrices (23) liées magnétiquement à une surface du manchon non magnétique.

**24.** Appareil de formation d'images selon la revendication 23, dans lequel l'ensemble de charge (2) à brosse magnétique présente une intensité de champ magnétique de 400 à 1500 gauss sur la surface du manchon non magnétique (22).

**25.** Appareil de formation d'images selon la revendication 23, dans lequel l'ensemble de charge (2) à brosse magnétique présente une intensité de champ magnétique de 600 à 1300 gauss sur la surface du manchon non magnétique (22).

**26.** Appareil de formation d'images selon la revendication 23, dans lequel le rouleau magnétique (21) possède deux ou plus de deux pôles magnétiques.

**27.** Appareil de formation d'images selon la revendication 23, dans lequel ledit élément porteur d'image (1) comporte un tambour photosensible, et des pôles magnétiques du rouleau magnétique (21) sont positionnés dans l'ensemble de charge (2) à brosse magnétique de manière qu'un pic d'une force magnétique puisse être présent dans un angle de 20°, dans un sens de rotation du tambour photosensible, mesuré par rapport à une ligne reliant les centres du tambour photosensible (1) et de l'ensemble de charge (2) à brosse magnétique.

**28.** Appareil de formation d'images selon la revendication 23, dans lequel ledit élément porteur d'image (1) comporte un tambour photosensible, et des pôles magnétiques du rouleau magnétique (21) sont positionnés dans l'ensemble de charge (2) à brosse magnétique de manière qu'un pic d'une force magnétique puisse être présent dans un angle de 10°, dans un sens de rotation du tambour photosensible, mesuré par rapport à une ligne reliant les centres du tambour photosensible (1) et de l'ensemble de charge (2) à brosse magnétique.

**29.** Appareil de formation d'images selon la revendication 23, dans lequel ledit élément porteur d'image comporte un tambour photosensible (1), et l'ensemble de charge (2) à brosse magnétique tourne dans le même sens que le tambour photosensible.

**30.** Appareil de formation d'images selon la revendication 29, dans lequel la rotation de l'ensemble de charge (2) à brosse magnétique est obtenue en fixant le rouleau magnétique (21) et en faisant tourner le manchon non magnétique (22).

**31.** Appareil de formation d'images selon la revendication 29, dans lequel le tambour photosensible (1) et l'ensemble de charge (2) à brosse magnétique tournent à la même vitesse périphérique.

**32.** Cartouche de traitement pouvant être montée de façon amovible sur un ensemble principal d'un appareil de formation d'images, comportant :

un élément porteur d'image (1) destiné à porter une image latente électrostatique ;
un moyen de charge (2) destiné à charger électrostatiquement l'élément porteur d'image ; et
un moyen de développement (8) contenant un toner magnétique (81) et destiné à rendre visible par développement l'image latente électrostatique maintenue sur l'élément porteur d'image, pour former une image en toner ;

dans laquelle :

ledit moyen de charge (2) comporte un ensemble de charge ayant une brosse magnétique formée de particules magnétiques conductrices (23) liées magnétiquement sur un manchon (22) ; ladite brosse magnétique dudit ensemble de charge étant en contact avec l'élément porteur d'image (1) et étant capable de charger électrostatiquement la surface de l'élément porteur d'image en injectant directement des charges dans la surface de l'élément porteur d'image ; et
ledit toner magnétique présente une valeur de σ·D·δ de 150 ou moins, ladite valeur étant obtenue en multipliant i) une quantité d'aimantation σ ($Am^2$/kg) dans un champ magnétique de 1 k oersted tel que mesuré par un magnétomètre à vibration, ii) un diamètre moyen en poids des particules ($D_4$) D (μm) du toner magnétique et iii) sa masse volumique δ (g/$cm^3$).

33. Cartouche de traitement selon la revendication 32, dans laquelle l'ensemble de charge (2) à brosse magnétique est conçu pour évacuer des particules de toner (81) restant sur l'élément porteur d'image (1) après un report d'image et entrant dans l'ensemble de charge (2).

34. Cartouche de traitement selon la revendication 33, dans laquelle le moyen de développement (8) est conçu pour enlever de l'élément porteur d'image (1) toutes particules de toner (81) évacuées de l'ensemble de charge (2) à brosse magnétique.

35. Cartouche de traitement selon la revendication 32 ou la revendication 33, comportant un moyen de nettoyage (6), précédant ledit moyen de charge (2), pour enlever du toner magnétique (81) retenu sur ledit élément porteur d'image (1) après un report d'image.

36. Cartouche de traitement selon l'une quelconque des revendications précédentes 32 à 35, dans laquelle l'ensemble de charge (2) à brosse magnétique comporte un manchon non magnétique (22), un rouleau magnétique (21) prévu à l'intérieur du manchon non magnétique et des particules magnétiques conductrices (23) liées magnétiquement à une surface du manchon non magnétique.

37. Cartouche de traitement selon la revendication 36, dans laquelle ledit ensemble de charge (2) à brosse magnétique possède une intensité de champ magnétique de 400 à 1500 gauss sur la surface du manchon non magnétique.

38. Cartouche de traitement selon la revendication 36, dans laquelle l'ensemble de charge (2) à brosse magnétique présente une intensité de champ magnétique de 600 à 1300 gauss sur la surface du manchon non magnétique (22).

39. Cartouche de traitement selon la revendication 36, dans laquelle le rouleau magnétique (21) possède deux ou plus de deux pôles magnétiques.

40. Cartouche de traitement selon la revendication 36, dans laquelle ledit élément porteur d'image comporte un tambour photosensible (1), et des pôles magnétiques du rouleau magnétique (21) sont positionnés dans l'ensemble de charge (2) à brosse magnétique de manière qu'un pic d'une force magnétique puisse être présent dans un angle de 20°, dans un sens de rotation du tambour photosensible, mesuré par rapport à une ligne reliant les centres du tambour photosensible (1) et de l'ensemble de charge (2) à brosse magnétique.

41. Cartouche de traitement selon la revendication 36, dans laquelle ledit élément porteur d'image comporte un tambour photosensible (1), et des pôles magnétiques du rouleau magnétique (21) sont positionnés dans l'ensemble de charge (2) à brosse magnétique de manière qu'un pic d'une force magnétique puisse être présent dans un angle de 10°, dans un sens de rotation du tambour photosensible, mesuré par rapport à une ligne reliant les centres du tambour photosensible (1) et de l'ensemble de charge (2) à brosse magnétique.

42. Cartouche de traitement selon la revendication 36, dans laquelle ledit élément porteur d'image (1) comporte un tambour photosensible, et l'ensemble de charge (2) à brosse magnétique tourne dans le même sens que le tambour photosensible.

43. Cartouche de traitement selon la revendication 42, dans laquelle la rotation de l'ensemble de charge (2) à brosse magnétique est obtenue en fixant le rouleau magnétique (21) et en faisant tourner le manchon non magnétique (22).

44. Cartouche de traitement selon la revendication 42, dans laquelle le tambour photosensible (1) et l'ensemble de charge (2) à brosse magnétique tournent à la même vitesse périphérique.

45. Procédé selon l'une quelconque des revendications 1 à 18, appareil selon l'une quelconque des revendications 19 à 31 ou cartouche de traitement selon l'une quelconque des revendications 32 à 44, dans lesquels ledit toner magnétique (81) possède une valeur de $\sigma \cdot D \cdot \delta$ comprise dans une plage de 50 à 150.

46. Procédé, appareil ou cartouche de traitement selon la revendication 45, dans lesquels ledit toner magnétique (81) possède une valeur de $\sigma \cdot D \cdot \delta$ comprise dans une plage de 100 à 130.

47. Procédé selon l'une quelconque des revendications 1 à 18, 45, 46 ; appareil selon l'une quelconque des revendications 19 à 31, ou 45 ou 46 ; ou cartouche de traitement selon l'une quelconque des revendications 32 à 46, dans lesquels ledit toner magnétique (81) possède une quantité d'aimantation $\sigma$ de 10 $Am^2$/kg à 30 $Am^2$/kg.

**48.** Procédé, appareil ou cartouche de traitement selon la revendication 47, dans lesquels ledit toner magnétique (81) possède une quantité d'aimantation σ de 10 Am$^2$/kg à 20 Am$^2$/kg.

**49.** Procédé selon l'une quelconque des revendications 1 à 18 ou 45 à 48, appareil selon l'une quelconque des revendications 19 à 31 ou 45 à 48, ou cartouche de traitement selon l'une quelconque des revendications 32 à 48, dans lesquels ledit toner magnétique (81) présente un diamètre moyen en poids D de particules de 2 μm à 20 μm.

**50.** Procédé, appareil ou cartouche de traitement selon la revendication 49, dans lesquels ledit toner magnétique (81) présente un diamètre moyen en poids D de particules de 4 μm à 8 μm.

**51.** Procédé selon l'une quelconque des revendications 1 à 8, 18 ou 45 à 50, appareil selon l'une quelconque des revendications 19 à 31, ou 45 à 50, ou cartouche de traitement selon l'une quelconque des revendications 32 à 50, dans lesquels ledit toner magnétique (81) présente une densité δ de 1,1 à 2,0.

**52.** Procédé, appareil ou cartouche de traitement selon la revendication 51, dans lesquels ledit toner·magnétique (81) possède une densité δ de 1,1 à 1,6.

**53.** Procédé selon l'une quelconque des revendications 1 à 48 ou 45 à 52, appareil selon l'une quelconque des revendications 19 à 31, ou 45 à 52, ou cartouche de traitement selon l'une quelconque des revendications 32 à 52, dans lesquels ledit toner magnétique (81) possède une résistivité volumique de 10$^9$ Ω ·cm ou plus.

**54.** Procédé, appareil ou cartouche de traitement selon la revendication 53, dans lesquels ledit toner magnétique (81) possède une résistivité volumique de 10$^{10}$ Ω ·cm ou plus.

**55.** Procédé selon l'une quelconque des revendications 1 à 18 ou 45 à 54, appareil selon l'une quelconque des revendications 19 à 31 ou 45 à 54, ou cartouche de traitement selon l'une quelconque des revendications 32 à 54, dans lesquels ledit toner magnétique (81) est un toner magnétique sphérique.

**56.** Procédé, appareil ou cartouche de traitement selon la revendication 55, dans lesquels ledit toner magnétique sphérique (81) présente un coefficient de forme SF-1 de 100 à 150 et SF-2 de 100 à 130.

**57.** Procédé, appareil ou cartouche de traitement selon la revendication 55, dans lesquels ledit toner magnétique sphérique (81) présente un coefficient de forme SF-1 de 100 à 145 et SF-2 de 100 à 125.

**58.** Procédé selon l'une quelconque des revendications 1 à 18 ou 45 à 57, appareil selon l'une quelconque des revendications 19 à 31, 45 à 57, ou cartouche de traitement selon l'une quelconque des revendications 32 à 57, dans lesquels ledit élément porteur d'image (1) comporte un photoconducteur organique ayant une couche d'injection de charges.

**59.** Procédé, appareil ou cartouche de traitement selon la revendication 58, dans lesquels ladite couche d'injection de charges comprend une couche de résine contenant en dispersion des particules conductrices fines.

**60.** Procédé, appareil ou cartouche de traitement selon la revendication 59, dans lesquels lesdites particules conductrices fines sont contenues dans ladite couche d'injection de charges en quantité allant de 20 parties en poids à 100 parties en poids sur la base de 100 parties en poids de la résine.

**61.** Procédé, appareil ou cartouche de traitement selon la revendication 59 ou la revendication 60, dans lesquels lesdites particules conductrices fines contiennent au moins un élément choisi dans le groupe constitué de SnO$_2$, TiO$_2$ et ITO.

**62.** Procédé, appareil ou cartouche de traitement selon l'une quelconque des revendications 59 à 61, dans lesquels ladite couche de résine est formée d'au moins un élément choisi dans le groupe constitué d'une résine acrylique, d'un polycarbonate, d'un polyester, de téréphthalate de polyéthylène et d'un polystyrène.

**63.** Procédé, appareil ou cartouche de traitement selon l'une quelconque des revendications 59 à 62, dans lesquels ladite couche d'injection de charges possède une résistivité volumique de 1 x 10$^8$ Ω ·cm ou plus.

**64.** Procédé selon l'une quelconque des revendications 1 à 18 ou 45 à 63, appareil selon l'une quelconque des revendications 19 à 31 ou 45 à 63, ou cartouche de traitement selon l'une quelconque des revendications 32 à 63, dans lesquels lesdites particules magnétiques conductrices (23) contiennent des cristaux à un seul constituant ou des cristaux mixtes d'un métal conducteur ou de métaux conducteurs.

65. Procédé selon l'une quelconque des revendications 1 à 18 ou 45 à 64, appareil selon l'une quelconque des revendications 19 à 31 ou 45 à 64, ou cartouche de traitement selon l'une quelconque des revendications 32 à 64, dans lesquels lesdites particules magnétiques conductrices (23) comprennent une matière magnétique conductrice en particules dispersées dans un polymère servant de liant.

66. Procédé selon l'une quelconque des revendications 1 à 18 ou 45 à 65, appareil selon l'une quelconque des revendications 19 à 31, ou 45 à 65, ou cartouche de traitement selon l'une quelconque des revendications 32 à 65, dans lesquels les surfaces desdites particules magnétiques conductrices (23) sont revêtues d'une résine contenant un agent conducteur.

67. Procédé selon l'une quelconque des revendications 1 à 18 ou 45 à 66, appareil selon l'une quelconque des revendications 19 à 31 ou 45 à 66, ou cartouche de traitement selon l'une quelconque des revendications 32 à 66, dans lesquels lesdites particules magnétiques conductrices (23) ont un diamètre moyen allant de 1 μm à 100 μm.

68. Procédé, appareil ou cartouche de traitement selon la revendication 67, dans lesquels lesdites particules magnétiques conductrices ont un diamètre moyen allant de 5 μm à 50 μm.

69. Procédé selon l'une quelconque des revendications 1 à 18 ou 45 à 68, appareil selon l'une quelconque des revendications 19 à 31, ou 45 à 68, ou cartouche de traitement selon l'une quelconque des revendications 32 à 68, dans lesquels lesdites particules magnétiques conductrices (23) ont une résistivité volumique de $10^{10}$ Ω ·cm ou moins.

70. Procédé, appareil ou cartouche de traitement selon la revendication 69, dans lesquels lesdites particules magnétiques conductrices (23) ont une résistivité volumique de $10^6$ Ω ·cm à $10^9$ Ω ·cm.

71. Procédé selon l'une quelconque des revendications 1 à 18 ou 45 à 70, appareil selon l'une quelconque des revendications 19 à 31 ou 45 à 70, ou cartouche de traitement selon l'une quelconque des revendications 32 à 70, dans lesquels lesdites particules magnétiques conductrices (23) ont une aimantation à saturation de 30 Am$^2$/kg ou plus.

72. Procédé, appareil ou cartouche de traitement selon la revendication 71, dans lesquels lesdites particules magnétiques conductrices ont une aimantation à saturation allant de 40 Am$^2$/kg à 300 Am$^2$/kg.

73. Procédé selon l'une quelconque des revendications 1 à 18 ou 45 à 72, appareil selon l'une quelconque des revendications 19 à 31 ou 45 à 72, ou cartouche de traitement selon l'une quelconque des revendications 32 à 72, dans lesquels ladite brosse magnétique comporte un noyau aimanté (21), un manchon isolant (22) entourant ledit noyau, et une intensité de champ magnétique à la périphérie dudit manchon (22) de 400 à 1500 gauss.

74. Procédé, appareil ou cartouche de traitement selon la revendication 73, dans lesquels ledit noyau magnétique (21) comporte deux ou plus de deux pôles magnétiques.

75. Procédé, appareil ou cartouche de traitement selon la revendication 73 ou la revendication 74, dans lesquels un espace entre ledit manchon isolant (22) et ledit élément porteur d'image (1) est compris dans une plage de 0,3 à 1,0 mm.

76. Procédé selon la revendication 75, dans lequel une différence de potentiel de tension comprise entre 5 et 50 volts est développée entre la surface dudit manchon isolant (22) et ledit élément porteur d'image (1).

77. Appareil selon la revendication 75, comprenant un moyen pour développer une différence de potentiel de tension comprise entre 5 et 50 V entre les surfaces dudit manchon isolant (22) et dudit élément porteur d'image (1).

78. Procédé selon l'une quelconque des revendications 1 à 18 ou 45 à 76, dans lequel un champ électrostatique d'une force de 50 à 1600 V/cm est produit entre ledit ensemble de charge (2) et ledit élément porteur d'image (1) .

**79.** Appareil selon l'une quelconque des revendications 19 à 31 ou des revendications 45 à 75 ou selon la revendication 77, comprenant un moyen pour produire un champ électrostatique d'une force de 50 à 1600 V/cm entre ledit ensemble de charge (2) et ledit élément porteur d'image (1).

**80.** Procédé, appareil ou cartouche de traitement selon l'une quelconque des revendications 74 à 79, dans lesquels la position desdits pôles magnétiques est établie de façon à produire une force magnétique maximale à l'intérieur d'un angle de 20°, avantageusement de 10°, dans un sens de rotation dudit élément porteur d'image (1), mesuré par rapport à une ligne de référence reliant le centre dudit chargeur à brosse magnétique (2) et le centre de rotation dudit élément porteur d'image (1).

**81.** Utilisation d'une matière pour développateur (t) dans un procédé de formation d'une image élément électrophotographique dans lequel un élément porteur d'image (1) est chargé électrostatiquement par un moyen de charge (2) ayant un ensemble de charge comportant une brosse magnétique formées de particules magnétiques conductrices (23) liées magnétiquement en contact avec l'élément porteur d'image pour charger sa surface par injection directe de charges ; dans laquelle la matière pour développateur comprend un toner magnétique (81) ayant une valeur de $\sigma \cdot D \cdot \delta$ de 150 ou moins, la valeur étant obtenue en multipliant i) une quantité d'aimantation $\sigma$ ($AM^2$/kg) dans un champ magnétique de 1 k oersted tel que mesuré par un magnétomètre à vibration, ii) un diamètre moyen en poids de particule ($D_4$) D ($\mu$m) du toner magnétique et iii) une masse volumique $\delta$ (g/cm$^3$) du toner.

**82.** Utilisation du développateur selon la revendication 81 dans un procédé de formation d'images selon l'une quelconque des revendications 2 à 18.

F I G. I

EP 0 709 746 B1

# F I G. 2

F I G. 3

F I G. 4

EP 0 709 746 B1

F I G. 5

PRIOR ART

FIG. 6

EP 0 709 746 B1